(19) Europäisches Patentamt
European Patent Office
Office européen des brevets

(11) Veröffentlichungsnummer : **0 313 513 B1**

# (12) EUROPÄISCHE PATENTSCHRIFT

(45) Veröffentlichungstag der Patentschrift : **17.06.92 Patentblatt 92/25**

(51) Int. Cl.[5] : **C09B 62/09,** C09B 62/513, D06P 1/38

(21) Anmeldenummer : **88810632.5**

(22) Anmeldetag : **15.09.88**

## (54) Reaktivfarbstoffe, deren Herstellung und Verwendung.

(30) Priorität : **19.10.87 CH 4098/87**

(43) Veröffentlichungstag der Anmeldung : **26.04.89 Patentblatt 89/17**

(45) Bekanntmachung des Hinweises auf die Patenterteilung : **17.06.92 Patentblatt 92/25**

(84) Benannte Vertragsstaaten : **CH DE FR GB LI**

(56) Entgegenhaltungen :
**EP-A- 0 208 655**
**EP-A- 0 214 093**

(73) Patentinhaber : **CIBA-GEIGY AG**
**Klybeckstrasse 141**
**CH-4002 Basel (CH)**

(72) Erfinder : **Tzikas, Athanassios, Dr.**
**Muttenzerstrasse 78**
**CH-4133 Pratteln (CH)**

EP 0 313 513 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Anmeldung betrifft neue verbesserte Reaktivfarbstoffe, die sich besonders für das Färben von cellulosehaltigen Fasermaterialien nach dem Ausziehverfahren oder nach Kontinueverfahren eignen, und die nass- und lichtechte Färbungen ergeben; sowie Verfahren zur Herstellung dieser Farbstoffe, und deren Verwendung zum Färben oder Bedrucken von textilen Materialien.

In der EP-A-0 214 093 werden Disazofarbstoffe offenbart, die in charakteristischer Weise eine Aminobenzol- oder Aminonaphthalin-Kupplungskomponente in terminaler Stellung enthalten, oder die zwei faserreaktive Gruppierungen jeweils terminal gebunden enthalten.

Gegenstand der Erfindung sind Reaktivfarbstoffe der Formel

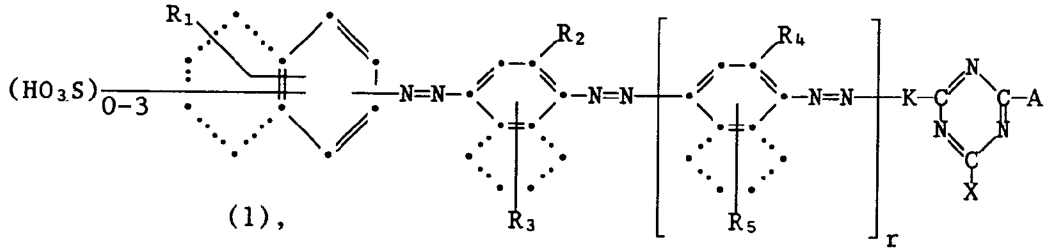

(1),

worin $R_1$ Wasserstoff, $C_{1-4}$-Alkyl, $C_{1-4}$-Alkoxy, Halogen, Nitro oder Carboxy; $R_2$ Wasserstoff, $C_{1-4}$-Alkyl, $C_{1-4}$-Alkoxy, Halogen, Carboxy oder Sulfo; $R_3$ Wasserstoff, $C_{1-4}$-Alkyl, $C_{1-4}$-Alkoxy, Halogen, Nitro, Acetylamino, Ureido, Carboxy, Sulfo, Benzoylamino, $\alpha,\beta$-Dibrompropionylamino oder $\gamma$-Vinylsulfonylbutyrylamino ist; $R_4$ bzw. $R_5$ die gleiche Bedeutung hat wie $R_2$ bzw. $R_3$, unabhängig voneinander; K der Rest einer Kupplungskomponente der Formel

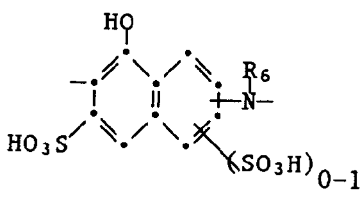

(2a)

oder

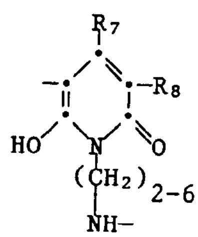

(2b)

wobei der Triazinrest in Formel (1) an die -N($R_6$)- bzw. -NH-Gruppe von K gebunden ist; $R_5$ Wasserstoff oder $C_{1-4}$-Alkyl; $R_7$ Wasserstoff oder $C_{1-4}$-Alkyl; $R_8$ Cyan, Carbamoyl, Carboxy oder Sulfomethyl; X Fluor, Chlor, Brom, Sulfo, $C_{1-4}$-Alkylsulfonyl, Phenylsulfonyl oder Carboxypyridinium; A ein Rest der Formel

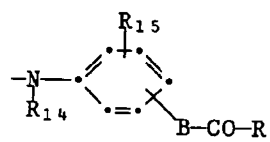

(3),

$R_{14}$ Wasserstoff oder Alkyl mit 1 bis 4 Kohlenstoffatomen, das durch Halogen, Hydroxy, Cyan, $C_{1-4}$-Alkoxy, $C_{1-4}$-Alkoxycarbonyl, Carboxy, Sulfamoyl, Sulfo oder Sulfato substituiert sein kann; $R_{15}$ Wasserstoff, $C_{1-4}$-Alkyl, $C_{1-4}$-Alkoxy, Halogen, Carboxy oder Sulfo; B eine direkte Bindung oder ein Rest

$$-(CH_2)_n-$$

oder

$$-O-(CH_2)_n- ,$$

n = 1 bis 6; R ein Rest der Formel

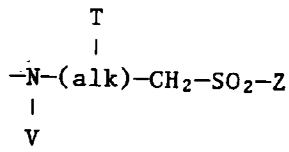 (4a),

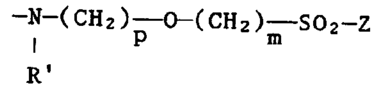 (4b),

$-NH-(alk')-NH-(alk')-SO_2-Z$ (4c),

oder 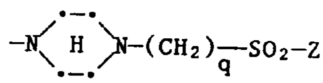 (4d),

Z β-Sulfatoäthyl, β-Thiosulfatoäthyl, β-Phosphatoäthyl, β-Acyloxyäthyl, β-Halogenäthyl oder Vinyl; alk ein Alkylenrest mit 1 bis 7 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat;
V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

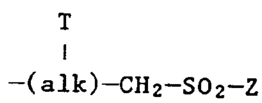 (4e),

worin Z, alk und T die angegebenen Bedeutungen haben; R′ Wasserstoff oder $C_{1-6}$-Alkyl; alk′ unabhängig voneinander Polymethylenreste mit 2 bis 6 C-Atomen oder deren verzweigte Isomere; und m = 1 bis 6, p = 1 bis 6 und q = 1 bis 6 ist, oder A ein direkt an den Triazinring gebundener Rest der Formel (4a), (4b), (4c) oder (4d) ist, worin Z, alk, T, V, R′, alk′, m, p und q die angegebenen Bedeutungen haben, und r = 0 oder 1 ist, wobei, falls r = 0 ist, diejenigen Reaktivfarbstoffe der Formel (1) ausgeschlossen sind, worin X Fluor und K der Rest der 1-Amino-8-hydroxynaphthalin-3,6- oder -4,6-disulfonsäure ist.

Als Beispiele für die substituenten $R_1$ bis $R_5$ und $R_{15}$, sofern diese als $C_{1-4}$-Alkyl, $C_{1-4}$-Alkoxy oder Halogen definiert sind, seien im einzelnen genannt:

Methyl, Aethyl, Propyl, Isopropyl, Butyl, Isobutyl, sec.-Butyl, tert.-Butyl, Methoxy, Aethoxy, Propyloxy, Isopropyloxy, Butyloxy, Isobutyloxy, sec.-Butyloxy, tert.-Butyloxy, Fluor, Chlor und Brom. Bevorzugt sind Methyl, Aethyl, Methoxy, Aethoxy und Chlor.

Der abspaltbare Substituent X ist ein Halogenatom, wie Fluor, Chlor oder Brom, eine niedrig-molekulare Alkylsulfonylgruppe, wie Methylsulfonyl oder Aethylsulfonyl, der Phenylsulfonylrest, die Sulfogruppe oder ein Carboxypyridiniumion, z.B. 3-Carboxypyridinium. Vorzugsweise ist X Fluor oder Chlor.

Der Rest $R_{14}$ ist, falls es sich um einen Alkylrest handelt, geradkettig oder verzweigt; er kann weitersubstituiert sein, z.B. durch Halogen, Hydroxy, Cyan, $C_{1-4}$-Alkoxy, $C_{1-4}$-Alkoxycarbonyl, Carboxy, Sulfamoyl, Sulfo oder Sulfato. Als Beispiele für $R_{14}$ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist $R_{14}$ Wasserstoff, Methyl oder Aethyl.

Der Rest B enthält 1 bis 6, vorzugsweise 1 bis 4 Kohlenstoffatome; Beispiele für B sind: Methylen, Aethylen, Propylen, Butylen, Methylenoxy, Aethylenoxy, Propylenoxy und Butylenoxy. Falls B einen Rest

$$-O-(CH_2)_n-$$

darstellt, ist B durch das Sauerstoffatom an den Benzolring gebunden. Vorzugsweise ist B eine direkte Bindung.

Als β-Halogenäthyl kommt für Z insbesondere der β-Chloräthylrest und als β-Acyloxyäthyl insbesondere der β-Acetoxyäthylrest in Betracht. Der Alkylenrest alk ist vorzugsweise Methylen, Aethylen, Methylmethylen, Propylen, Butylen oder Pentylen. Der Substituent T ist als Acyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert-Butyl sein.

Derivate der Carboxy- oder Sulfogruppe sind z.B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest R′ ist beispielsweise Methyl, Aethyl, Propyl, Isopropyl, Butyl, Isobutyl, sec-Butyl, tert-Butyl, Pentyl oder Hexyl, oder vorzugsweise Wasserstoff. Die Polymethylenreste alk′ sind vorzugsweise Aethylen, Propylen oder Butylen. Die Indizes m, p und q sind unabhängig voneinander und vorzugsweise 2, 3 oder 4.

Falls T ein Rest $-SO_2-Z$ und V Wasserstoff ist, hat der Rest der Formel (4a) vorzugsweise die Form

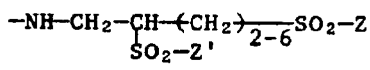 (4f),

worin Z und Z′ unabhängig voneinander β-Sulfatoäthyl, β-Thiosulfatoäthyl, β-Phosphatoäthyl, β-Acyloxyäthyl, β-Halogenäthyl oder Vinyl ist. Eine wichtige Formelvariante dieses Restes ist:

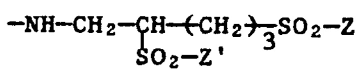 (4g),

worin Z = Z′ ist, wobei Z bzw. Z′ die oben angegebene Bedeutung hat; insbesondere ist Z bzw. Z′ β-Sulfatoäthyl, β-Chloräthyl oder Vinyl.

Bevorzugte Ausführungsformen sind:

1) Reaktivfarbstoffe der Formel (1), worin K ein Rest der Formel (2a), $R_6$ Wasserstoff, Methyl oder Aethyl; X Fluor oder Chlor; A ein Rest der Formel (3); $R_{14}$ Wasserstoff; $R_{15}$ Wasserstoff, Methyl, Methoxy oder Chlor; B eine direkte Bindung oder ein Rest $-CH_2-$ oder $-O-CH_2CH_2-$; R ein Rest der Formel (4a) oder (4b); Z β-Sulfatoäthyl, β-Chloräthyl oder Vinyl; T Wasserstoff oder ein Rest $-SO_2-Z$, worin Z die oben angegebene Bedeutung hat; V Wasserstoff oder ein Rest der Formel (4e), worin Z und T die oben angegebenen Bedeutungen haben; R′ Wasserstoff; p = 2, m = 2 und r = 0 ist, wobei die unter Formel (1) angegebene Einschränkung gilt.

2) Reaktivfarbstoffe der Formel (1), worin K ein Rest der Formel (2a), $R_6$ Wasserstoff, Methyl oder Aethyl; X Fluor oder Chlor; A ein Rest der Formel (4a) oder (4b); Z β-Sulfatoäthyl, β-Chloräthyl oder Vinyl; T Wasserstoff oder ein Rest $-SO_2-Z$, worin Z die oben angegebene Bedeutung hat; V Wasserstoff oder ein Rest der Formel (4e), worin Z und T die oben angegebenen Bedeutungen haben; R′ Wasserstoff; p = 2, m = 2 und r = 0 ist, wobei die unter Formel (1) angegebene Einschränkung gilt.

3) Reaktivfarbstoffe der Formel (1), worin K ein Rest der Formel (2a), $R_6$ Wasserstoff, Methyl oder Aethyl; X Fluor oder Chlor; A ein Rest der Formel (3); $R_{14}$ Wasserstoff; $R_{15}$ Wasserstoff, Methyl, Methoxy oder Chlor; B eine direkte Bindung oder ein Rest $-CH_2-$ oder $-O-CH_2CH_2-$; R ein Rest der Formel (4a) oder (4b); Z β-Sulfatoäthyl, β-Chloräthyl oder Vinyl; T Wasserstoff oder ein Rest $-SO_2-Z$, worin Z die oben angegebene Bedeutung hat; V Wasserstoff oder ein Rest der Formel (4e), worin Z und T die oben angegebenen Bedeutungen haben; R′ Wasserstoff; p = 2, m = 2 und r = 1 ist.

4) Reaktivfarbstoffe der Formel (1), worin K ein Rest der Formel (2a), $R_6$ Wasserstoff, Methyl oder Aethyl; X Fluor oder Chlor; A ein Rest der Formel (4a), (4b), (4c) oder (4d); Z β-Sulfatoäthyl, β-Chloräthyl oder Vinyl; T Wasserstoff oder ein Rest $-SO_2-Z$, worin Z die oben angegebene Bedeutung hat; V Wasserstoff oder ein Rest der Formel (4e), worin Z und T die oben angegebenen Bedeutungen haben; R′ Wasserstoff; p = 2, m = 2 und r = 1 ist.

In den Varianten 1) bis 4) ist R bzw. A vorzugsweise ein Rest der Formel

$-NHCH_2CH_2SO_2CH_2CH_2OSO_3H$ (5a)

$-NHCH_2CH_2SO_2CH_2CH_2Cl$ (5b)

$-NHCH_2CH_2SO_2CH=CH_2$ (5c)

$-NHCH_2CH_2SO_2CH=CH_2$ (5d)

$-NHCH_2CH_2OCH_2CH_2SO_2CH_2CH_2Cl$ (5e)

$-NHCH_2CH_2OCH_2CH_2SO_2=CH_2$ (5f)

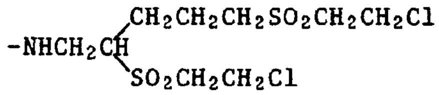 (5g),

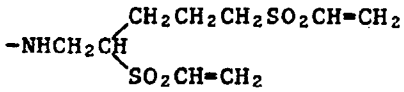 (5h)

oder 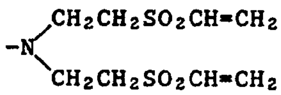 (5i).

Die wichtigsten Disazo- und Trisazochromophore gemäss Formel (1) sind in den Ausführungsbeispielen dargestellt.

Man erhält die Reaktivfarbstoffe der Formel (1), indem man einen entsprechenden Aminodisazo- oder Aminotrisazo-Farbstoff oder ein Farbstoffvorprodukt, ein s-Triazin der Formel

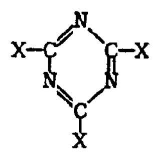 (6)

und ein Amin der Formel

H—A (7)

in beliebiger Folge miteinander umsetzt, wobei X und A die unter Formel (1) angegebenen Bedeutungen haben, oder, im Falle der Verwendung von Farbstoffvorprodukten, die erhaltenen Zwischenprodukte in die gewünschten Monohalogentriazinfarbstoffe überführt und gegebenenfalls eine weitere Umwandlungsreaktion anschliesst.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Eine bevorzugte Verfahrensvariante ist durch gekennzeichnet, dass man einen Aminodisazo- oder Aminotrisazo-Farbstoff mit einem s-Triazin der Formel (6) kondensiert, und die erhaltene Triazinverbindung anschliessend mit einem Amin der Formel (7) kondensiert.

Eine weitere bevorzugte Verfahrensvariante besteht darin, dass man eine Komponente eines Aminodisazo- oder Aminotrisazo-Farbstoffes, die einen Rest der Formel

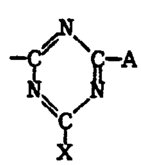 (8)

enthält, mit einer zur Herstellung des Farbstoffes benötigten zweiten Komponente umsetzt.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (7) dem Triazin der Formel (6) und dem organischen Farbstoff oder einem Vorprodukt zweckmässigerweise zuerst ausgeführt wird, die des Triazins mit der Verbindung der Formel (7) oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Z ein Rest HO-$CH_2CH_2$-ist, herstellen und das Zwischenprodukt vor oder nach der Acylierung mit Schwefelsäure umsetzen, so dass die Hydroxygruppe in die Sulfatogruppe übergeführt wird; oder man verwendet einen analogen Farbstoff, worin Z die Gruppe $H_2C$=CH- ist, und lagert an das Zwischenprodukt Thioschwefelsäure an, wobei ein Rest $HO_3SS$-$CH_2CH_2$-entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen Restes für Z in eine Verbindung der Formel (1) oder ein Zwischenprodukt anstelle eines Halogenatoms oder der Sulfatogruppe, beispielsweise einer Thiosulfato-oder Phosphatogruppe, erfolgt in an sich bekannter Weise. Der Weg der Herstellung über eine Zwischenstufe des Reaktivrestes geht in vielen Fällen einheitlich und vollständig.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffab-spaltenden Mitteln, wie Natriumhydroxid, behandeln, wobei die Sulfatoäthylsulfonylreste in Vinylsulfonylreste übergehen.

Falls man von Farbstoffvorprodukten ausgeht, gelangt man zu den Reaktivfarbstoffen der Formel (1), indem man eine Komponente des Farbstoffes, die eine Gruppe -N($R_6$)H bzw. -$NH_2$ enthält, und ein Triazin der Formel (6) kondensiert, vorher oder nachher mit einer Verbindung der Formel (7) kondensiert, und mit der anderen Komponente des Farbstoffes umsetzt.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Diazokomponenten:

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-di-chlorbenzol, 1-Amino-2,5-dimethylbenzol, 1-Amino-3-methyl-6-methoxybenzol, 1-Amino-2-methoxy-4-nitrobenzol, 1-Aminobenzol-2-, -3- oder -4-carbonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3oder -4-sulfonsäure, 1-Amino-2-carboxybenzol-1-sulfonsäure, 1-Amino-4-carboxybenzol-2-sulfonsäure, 1-Amino-4- oder -5-chlorbenzol-2-sulfonsäure, 1-Amino-6-chlorbenzol-3-oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3-oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Aminonaphthalin-3,6- oder -5,7-disulfonsäure,

2-Aminonaphthalin-1,5-, -1,7-, -3,6-, -5,7-, -4,8-oder -6,8-disulfonsäure, 1-Aminonaphthalin-2,5,7-trisulfonsäure, 2-Aminonaphthalin-1,5,7-, -3,6,8- oder -4,6,8-trisulfonsäure, 4-Aminoazobenzol-3,4′-disulfonsäure, 3-Methoxy-4-amino-6-methylazobenzol-2′,4′-disulfonsäure,
3-Methoxy-4-amino-6-methylazobenzol-2′,5′-disulfonsäure.

Kupplungskomponenten

1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure-, 2-Acetylamino-5-hydroxynaphthalin-7-sulfonsäure, 2-Amino-5-hydroxynaphthalin-1,7-disulfonsäure-, 2-Amino-8-hydroxynaphthalin-6-sulfon- säure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7- sulfonsäure, 1-Amino-8-hydroxynaphthalin-3,6-bzw. -4,6-disulfonsäure, 1-Acetylaminol-8-hydroxynaphthalin-3,6-bzw. -4,6-disulfonsäure, 1-β-Aminoäthyl-3-cyan-4-methyl-6-hydroxypyridon-(2), 1-γ-Aminopropyl-3-sulfomethyl-4-methyl-6-hydroxypyridon-(2).

Triazine der Formel (6)

2,4,6-Trifluor-s-triazin (Cyanurfluorid), 2,4,6-Trichlor-s-triazin (Cyanurchlorid), 2,4,6-Tribrom-s-triazin (Cyanurbromid), 2,4,6-Trisulfo-s-triazin, 2,4,6-Tris-methylsulfonyl-s-triazin, 2,4,6-Trisphenylsulfonyl-s-triazin.

Amine der Formel (7)

Amine, worin A einen Rest der Formel (3) darstelle, können hergestellt werden, indem man entsprechende Nitrobenzolcarbonsäurechloride, Nitrophenylalkansäurechloride oder Nitrophenoxyalkansäurechloride mit Aminen der Formel

$$H—R \qquad (9),$$

welche den Resten der Formeln (4a) bis (4d) entsprechen, kondensiert, und die Nitrogruppen zu Aminogruppen reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperatur bis etwa 40°C. Die Reduktion kann auch mit Fe/Salzsäure oder Fe/Essigsäure in wässriger Lösung durchgeführt werden.

Nach einer anderen, in der DE-OS 20 40 620 beschriebenen Methode kann man das Säurechlorid mit einem ungesättigten aliphatischen Amin umsetzen, und an die Doppelbindung des Säureamids 2-Mercaptoäthanol bei Temperaturen zwischen 50°C und 180°C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat, Kaliumpersulfat oder Chromsäure, oder mit Chlor/Salzsäure je in wässrigem, wässrig-organischem oder organischem Medium.

Die so erhältlichen Carbonsäureamide, in denen die Gruppierung $-SO_2-Z$ eine β-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte übergeführt werden, in denen die Gruppierung $-SO_2-Z$ z.B. die Gruppierung $-SO_2-CH_2-CH_2-O-SO_3H$, $-SO_2-CH_2-CH_2-O-PO_3H_2$, $-SO_2-CH_2-CH_2-$Halogen, $-SO_2-CH_2-CH_2-O-CO-CH_3$ oder $-SO_2-CH_2-CH_2-O-CO-C_6H_5$ bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxyd oder Natriumcarbonat, in entsprechende Verbindungen übergeführt werden, in denen die Gruppierung $-SO_2-Z$ die Gruppierung $-SO_2-CH=CH_2$ bedeutet. Die so erhaltenen Produkte

können wiederum durch Umsetzung (Addition) mit Salzen den Thioschwefelsäure, wie Natriumthiosulfat, in Verbindungen übergeführt werden, in denen die Gruppierung $-SO_2-Z$ die Gruppierung $-SO_2-CH_2-CH_2-S-SO_3H$ bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Bevorzugt sind Verbindungen der Formel

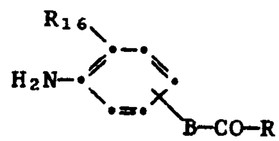

(10),

worin R einer der Reste der Formeln (4a) bis (4d), $R_{16}$ Wasserstoff, Methyl, Aethyl, Methoxy, Aethoxy oder Chlor ist, und B die unter Formel (1) angegebene Bedeutung hat. Vorzugsweise ist B eine direkte Bindung oder Methylen, Methylenoxy oder Aethylenoxy.

Das bevorzugte Verfahren zur Herstellung der Verbindung der Formel (10) besteht darin, dass man eine Verbindung der Formel

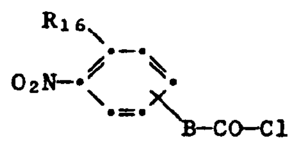

(11)

mit einem Amin der Formel

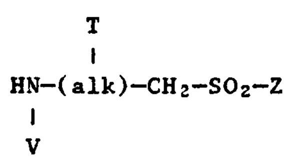

(12a),

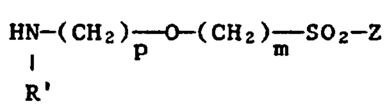

(12b),

$H_2N-(alk')-NH-(alk')-SO_2-Z$ (12c)

oder 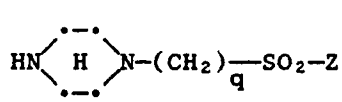

(12d)

kondensiert, und die Nitrogruppe zur Aminogruppe reduziert.

Nach einer Abänderung dieses Verfahrens können Verbindungen der Formel (10) auch in der Weise hergestellt werden, dass man eine Verbindung der Formel (11) mit einem Amin der Formel

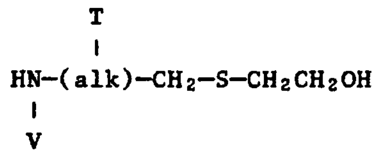

(13a),

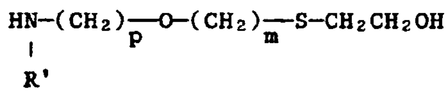

(13b),

$H_2N$-(alk')-NH-(alk')-S-$CH_2CH_2OH$ (13c)

oder 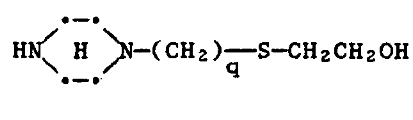 (13d)

kondensiert, das Kondensationsprodukt mit elementarem Chlor zu der entsprechenden β-Chloräthylsulfonyl-Verbindung oxydiert, und die Nitrogruppen zu Aminogruppen reduziert.

Ferner ist noch eine andere Verfahrensvariante anwendbar, wonach man zuerst eine Verbindung der Formel (11) mit einem der Amine der Formeln (13a) bis (13d) kondensiert, das erhaltene Produkt mit einem Peroxid zum Sulfon oxydiert, dann die Nitrogruppe zur Aminogruppe reduziert, die erhaltene Aminoverbindung mit einem s-Triazin der Formel (6) kondensiert, und zuletzt die Hydroxygruppe in dem Rest von einem der Amine der Formeln (13a) bis (13d) sulfatiert.

Die Kondensation der Verbindung der Formel (11) mit den Aminen der Formeln (13a) bis (13d) wird z.B. in Chloroform bei Raumtemperatur und in Gegenwart von alkalischen, säurebindenden Mitteln, z.B. Alkalihydroxiden, -carbonaten oder -bicarbonaten, durchgeführt. Anschliessend wird das Kondensationsprodukt in an sich bekannter Weise mit einer Chlor/Salzsäure-Mischung oxydiert. Die Reduktion der Nitrogruppe zur Aminogruppe erfolgt wie oben beschrieben.

Die als Ausgangsverbindungen verwendeten Amine der Formeln (12a) bis (13d) können analog dem Verfahren des Beispiels 1 der DE-OS 26 14 550 hergestellt werden.

Amine der Formel (9) β-(β'-Chloräthylsulfonyl)-äthylamin,
β-[β'-(β''-Chloräthylsulfonyl)-äthyloxy]-äthylamin,
γ-(β'-Chloräthylsulfonyl)-propylamin,
Bis-[β-(β'-chloräthylsulfonyl)-äthyl]-amin,
Bis-[γ-(β'-chloräthylsulfonyl)-propyl]-amin,
β-(Vinylsulfonyl)-äthylamin,
Bis-[β-(vinylsulfonyl)-äthyl]-amin,
δ-(β'-Chloräthylsulfonyl)-butylamin,
β-(β'-Sulfatoäthylsulfonyl)-äthylamin,
Bis-[β-(β'-sulfatoäthylsulfonyl)-äthyl]-amin,
N-(γ-Vinylsulfonyl-propyl)piperazin,
β-(β'-Vinylsulfonyl-äthylamino)-äthylamin,
N-(β-Vinylsulfonyl-äthyl)piperazin,
β-(β'-Vinylsulfonyl-äthyloxy)-äthylamin,
β-[β'-(β''-Chloräthylsulfonyl)-äthylamino]-äthylamin,
β-[β'-(β''-Sulfatoäthylsulfonyl)-α'-methyl-äthylamino]-äthylamin,
β-[β'-(β''-Sulfatoäthylsulfonyl)-α'-methyl-äthylamino]-β-methyläthylamin,
γ-[β'-(β''-Sulfatoäthylsulfonyl)-α'-methyl-äthylamino]-propylamin,
δ-[β'-(β''-Sulfatoäthylsulfonyl)-α'-methyl-äthylamino]-n-butylamin,
α-Carbonsäure-β-(β'-chloräthylsulfonyl)-äthylamin,
α-Carbonsäureäthylester-β-(β'-chloräthylsulfonyl)-äthylamin,
β-Hydroxy-γ-(β'-chloräthylsulfonyl)-propylamin,
β,γ-(Bis-(β'-chloräthylsulfonyl)-propylamin,
β-Acetoxy-γ-(β'-acetoxyäthylsulfonyl)-propylamin,
β-Chlor-γ-(β'-chloräthylsulfonyl)-propylamin,

β-Sulfato-γ-(β'-sulfatoäthylsulfonyl)-propylamin,
Bis-[β-hydroxy-γ-(β'-chloräthylsulfonyl)-propyl]-amin,
Bis-[β-chlor-γ-(β'-chloräthylsulfonyl)-propyl]-amin,
Bis-[β-sulfato-γ-(β'-sulfatoäthylsulfonyl)-propyl]-amin,
β-Hydroxy-γ-(β'-vinylsulfonyl)-propylamin,
4-(β-Chloräthylsulfonyl)-cyclohexylamin,
4-(β-Sulfatoäthylsulfonyl)-cyclohexylamin,
4-Vinylsulfonylpiperidin,
4-(β-Chloräthylsulfonyl)-piperidin,
2-[β-(β'-Chloräthylsulfonyl)äthyl]-piperidin,
2-(β-Sulfatoäthylsulfonyl)methylpiperidin,
N-[γ-(β'-Chloräthylsulfonyl)propyl]-piperazin,
γ-[γ'-(β"-Chloräthylsulfonyl)propyloxy]-propylamin,
β-[Bis-(β'-vinylsulfonyl-äthyl)amino]-äthylamin,
(β,ε-Bis-vinylsulfonyl)-n-pentylamin
sowie gegebenenfalls weitere Verbindungen, worin die β-Chloräthylsulfonyl-Gruppe durch β-Sulfatoäthylsulfonyl oder
Vinylsulfonyl ersetzt ist, oder worin die β-Chloräthylsulfonyl-, β-Sulfatoäthylsulfonyl- oder Vinylsulfonyl-Gruppe durch β-Hydroxyäthyl ersetzt ist.

Amine der Formel (9), worin R ein Rest der Formel (4f) bzw. (4g) ist, können nach der folgenden Arbeitsvorschrift hergestellt werden.

A: Synthese von 2,5-Dichloraminopentan-hydrochlorid aus Tetrahydrofurfurylamin-hydrochlorid

137,5 Teile Tetrahydrofurfurylaminhydrochlorid werden mit 1500 Teilen Salzsäure (chem. rein) bei Raumtemperatur versetzt. Anschliessend wird die Reaktionslösung in einer Druckapparatur auf 130°C erwärmt. Dabei steigt der Druck bis auf 8 bar. Nach 24 Stunden Reaktionsdauer wird die Temperatur auf 25°C abgekühlt. Die dunkelbraune Lösung wird mit Aktivkohle behandelt und klärfiltriert, und die Mutterlauge wird im Rotationsvacuum-Apparat eingeengt. Nach der Umkristallisation aus 1200 Teilen Aethanol erhält man 130 Teile eines analysenreinen Produktes, 2,5-Di-chloraminopentan-hydrochlorid, mit folgender Formel

$$HCl \cdot H_2N-CH_2-\underset{Cl}{\underset{|}{C}}H-CH_2-CH_2-CH_2-Cl$$

Analyse: Forme $C_5H_{12}Cl_3N$ (MG = 192,52)

| Berechnet | Gefunden |
|---|---|
| 31,20 % C | 30,8 % C |
| 6,29 % H | 6,4 % H |
| 7,28 % N | 6,9 % N |
| 55,25 % Cl | 54,85 % Cl |

B: Umsetzung von 2,5-Dichloraminopentanhydrochlorid mit 2 Mol 2-Mercaptoäthanol und anschliessende Chloroxydation zu 2,5-Bis-β-chloräthylsulfonylaminopentan-hydrochlorid

25,2 Teile Natriumhydroxidplätzchen werden in 250 Teilen Aethanol (94%ig) bei Raumtemperatur gelöst. Zu dieser Lösung gibt man 32 Teile 2-Mercaptoäthanol so zu, dass die Temperatur nicht über 35°C steigt. Nun wird die Lösung auf 70°C erwärmt, und bei dieser Temperatur werden innerhalb einer Stunde 38,5 Teile 2,5-Dichloraminopentanhydrochlorid gelöst in 240 Teilen Aethanol (94%ig) zugetropft. Anschliessend wird die Reaktionsmasse 3 Stunden unter Rückfluss verrührt. Nun wird Aktivkohle zugesetzt und auf Raumtemperatur abgekühlt. Das ausgefallene Salz wird nun durch Filtration entfernt und das Filtrat unter reduziertem vacuum abdestilliert. Als Rückstand verbleibt ein Oel, das sich ab ca. 160°C zersetzt. Die Verbindung hat die Formel

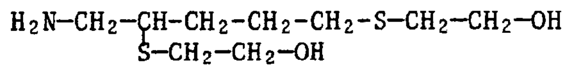

Analyse: Formel $C_9H_{21}N_1O_2S_2$ (MG = 239,40)

| Berechnet | Gefunden |
|---|---|
| 45,2 % C | 45,0 % C |
| 8,8 % H | 8,6 % H |
| 5,9 % N | 5,9 % N |
| 26,7 % S | 25,9 % S |

Der Rückstand wird in 200 Teilen Wasser gelöst und bei max. 33°C mit 70 Teilen Salzsäure (37%ig) versetzt. Dann werden unter Eiskühlung bei 15-20°C innerhalb einer Stunde 60 Teile Chlorgas über Niveau eingeleitet, bis keine Chloraufnahme mehr beobachtet wird. Nun wird unter Wasserstrahlvacuum die Salzsäure abdestilliert; Rohausbeute: 55 Teile. Nach der Umkristallisation aus Methanol und Aktivkohle erhält man das analysenreine Produkt 2,5-Bis-β-chloräthylsulfonylaminopentanhydrochlorid mit einem Schmelzpunkt von 99°-101°C und folgender Formel

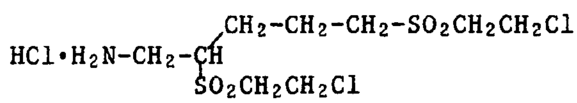

Analyse: Formel $C_9H_{19}Cl_2NO_4S_2 \cdot HCl$ (MG = 376,74)

| Berechnet | Gefunden |
|---|---|
| 28,69 % C | 28,5 % C |
| 5,35 % H | 5,8 % H |
| 3,72 % N | 3,7 % N |
| 17,02 % S | 16,7 % S |
| 28,23 % Cl | 27,95 % Cl |

Das 20,1 MHz-$^{13}$C-Spektrum in DMSO sieht wie folgt aus:

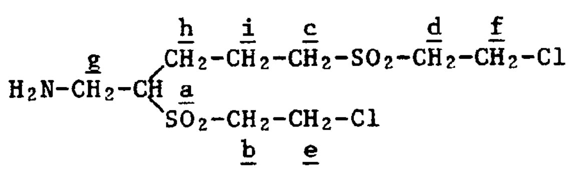

| | |
|---|---|
| a | 58,7278 ppm |
| b, c, d | 53,7526 ppm<br>52,2616 ppm<br>52,2141 ppm |
| e, f | 36,3773 ppm<br>35,9702 ppm |
| g | 36,0882 ppm |
| h | 23,7356 ppm |
| i | 18,3801 ppm |

Entsprechende Amine H-R sind beispielsweise:
2,5-Bis-β-chloräthylsulfonylpentylamin,
2,5-Bis-β-sulfatoäthylsulfonylpentylamin,
2,5-Bis-vinylsulfonylpentylamin,
2,4-Bis-β-chloräthylsulfonylbutylamin und
2,3-Bis-β-chloräthylsulfonylpropylamin.

Die Kondensation des s-Triazins der Formel (6), insbesondere eines 2,4,6-Trihalogen-s-triazins mit den organischen Farbstoffen bzw. den eine Gruppe -N($R_6$)H bzw. -$NH_2$ enthaltenden kupplungsfähigen Komponenten erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formel (7) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8 bevorzugt 5 bis 6,5, durchgeführt.

Die Kondensation des Halogentriazins mit einer Verbindung der Formel (7) kann vor oder nach der Kondensation des Halogentriazins mit einem Farbstoff geschehen. Die Kondensation des Halogentriazins mit einer Verbindung der Formel (7) erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Der in den Farbstoffen der Formel (1) enthaltene Rest der Formel

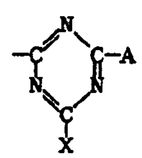

(8)

ist eine reaktive Gruppierung, worin X eine faserreaktive Abgangsgruppe darstellt. Ausserdem weist der Rest R einen Reaktivrest auf und zwar die Gruppe -$SO_2$-Z; dieser Reaktivrest enthält eine Abgangsgruppe, z.B. wenn Z β-Chloräthyl ist, oder kann nach Art von faserreaktiven Gruppen wirksam werden, z.B. wenn Z Vinyl ist (Grundlegendes über Reaktivfarbstoffe siehe Venkataraman, K.: The Chemistry of Synthetic Dyes. New York: Academic Press 1972; Vol VI, Reactive Dyes).

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose z.B. Viscose, ferner Modalfasern und deren Mischungen mit Baumwolle. Die Reaktivfarbstoffe der Formel (1) sind auch zum Färben oder Bedrucken

von hydroxylgruppenhaltigen Fasern geeignet, die in Mischgeweben enthalten sind, z.B. von Gemischen aus Baumwolle mit Polyamidfasern, oder insbesondere Polyesterfasern.

Die Reaktivfarbstoffe der Formel (1) können auch in Mischungen untereinander oder in Mischungen mit anderen Reaktivfarbstoffen oder nicht-reaktiven Farbstoffen, z.B. Säurefarbstoffen oder Dispersionsfarbstoffen, zum Färben oder Bedrucken der genannten Fasermaterialien verwendet werden.

Die erfindungsgemässen Farbstoffe lassen sich auch verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Disazo- oder Trisazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 36 Teile 3-Aminobenzoesäure-N′-β-(β′-sulfatoäthylsulfonyl)-äthylamid in 150 Teilen Wasser hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 49 Teilen diazotiertem Produkt folgender Formel

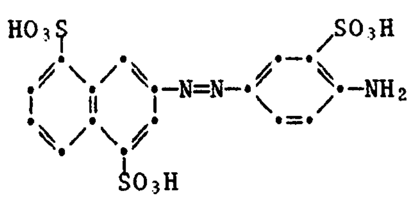

gekuppelt. Nach vollständiger Kupplungsreaktion bei pH 8 wird die Reaktionsmischung geklärt und der gebildete Reaktivfarbstoff der Formel

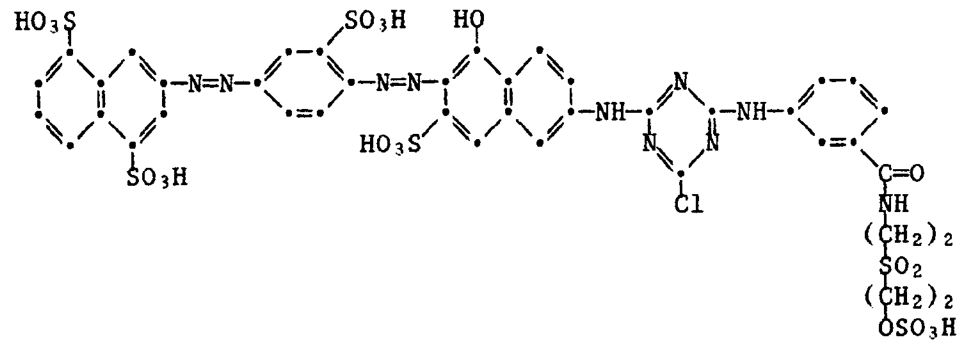

durch Eindampfen oder Gefriertrocknen der Reaktionslösung bei pH 7 isoliert. Er färbt Baumwolle in roten Tönen.

Beispiel 2:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 36 Teile 4-Aminobenzoesäure-N′-β-(β′-sulfatoäthylsulfonyl)-äthylamid in 150 Teilen Wasser hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 49 Teilen diazotiertem Produkt folgender Formel

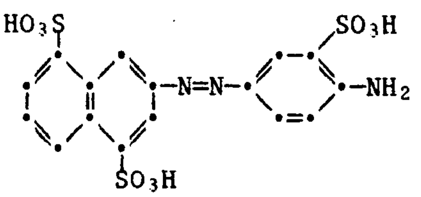

gekuppelt. Nach vollständiger Kupplungsreaktion bei pH 8 wird die Reaktionsmischung geklärt und der gebildete Reaktivfarbstoff der Formel

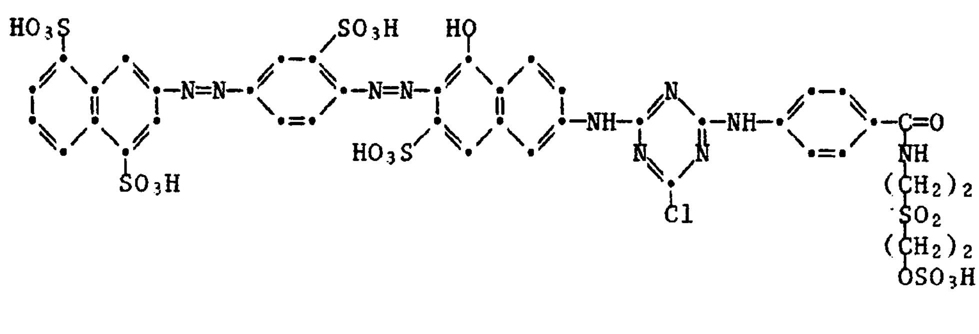

durch Eindampfen oder Gefriertrocknen der Reaktionslösung bei pH 7 isoliert. Er färbt Baumwolle in roten Tönen.

Beispiel 3:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 18,5 Teilen Cyanurchlorid gegeben.

Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 26 Teile der Verbindung der Formel $HClH_2NCH_2CH_2OCH_2CH_2SO_2CH_2CH_2Cl$ hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 49 Teilen diazotiertem Produkt folgender Formel

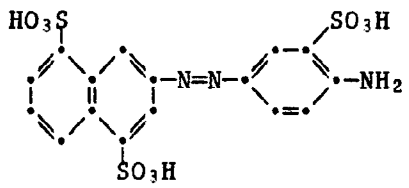

gekuppelt. Nach vollständiger Kupplungsreaktion bei pH 8 wird die Reaktionsmischung geklärt und der gebildete Reaktivfarbstoff der Formel

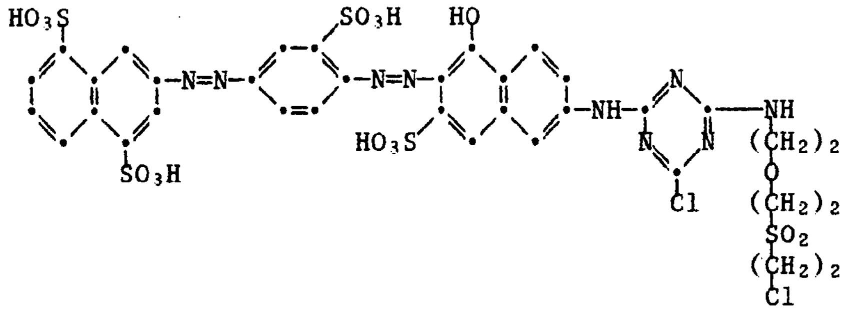

durch Eindampfen oder Gefriertrocknen der Reaktionslösung bei pH 7 isoliert. Er färbt Baumwolle in roten Tönen.

Beispiel 4:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 38 Teile 2,5-Bis-β-chloräthylsulfonyl-aminopentan-hydrochlorid als Pulver hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 49 Teilen diazotiertem Produkt folgender Formel

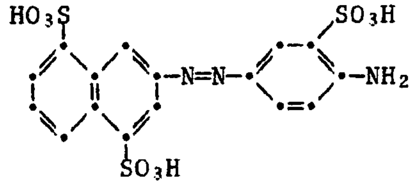

gekuppelt. Nach vollständiger Kupplungsreaktion bei pH 8 wird die Reaktionsmischung geklärt und der gebildete Reaktivfarbstoff der Formel

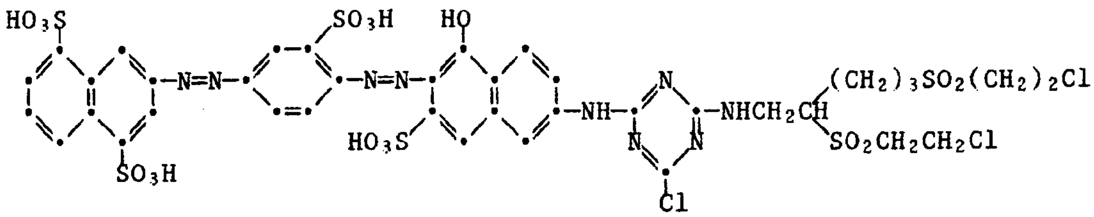

durch Eindampfen oder Gefriertrocknen der Reaktionslösung bei pH 7 isoliert. Er färbt Baumwolle in roten Tönen.

Beispiel 5:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 16 Teilen Cyanfluorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 30 Teile der Verbindung der Formel $HClH_2NCH_2CH_2OCH_2CH_2SO_2CH_2CH_2Cl$ hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 49 Teilen diazotiertem Produkt folgender Formel

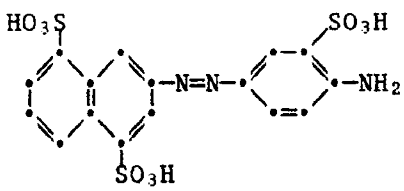

gekuppelt. Nach vollständiger Kupplungsreaktion bei pH 8 wird die Reaktionsmischung geklärt und der gebildete Reaktivfarbstoff der Formel

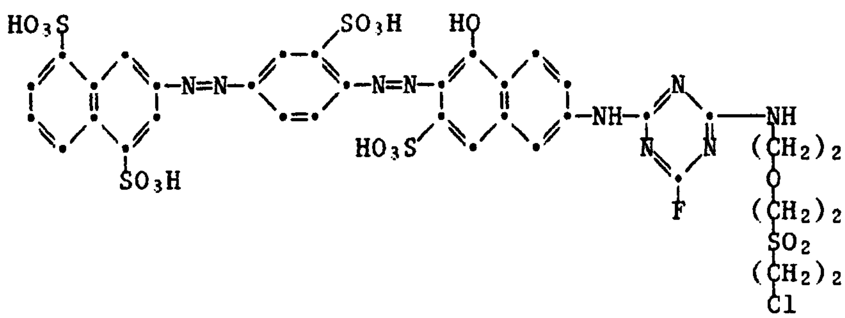

durch Eindampfen oder Gefriertrocknen der Reaktionslösung bei pH 7 isoliert. Er färbt Baumwolle in roten Tönen.

Beispiel 6:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 16 Teilen Cyanfluorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 40 Teile 3-Aminobenzoesäure-N′-β-(β′-sulfatoäthylsulfonyl)-äthylamid in 150 Teilen Wasser hinzu. Der pH der

Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 49 Teilen diazotiertem Produkt folgender Formel

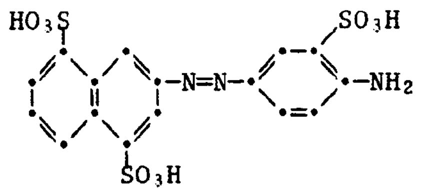

gekuppelt. Nach vollständiger Kupplungsreaktion bei pH 8 wird die Reaktionsmischung geklärt und der gebildete Reaktivfarbstoff der Formel

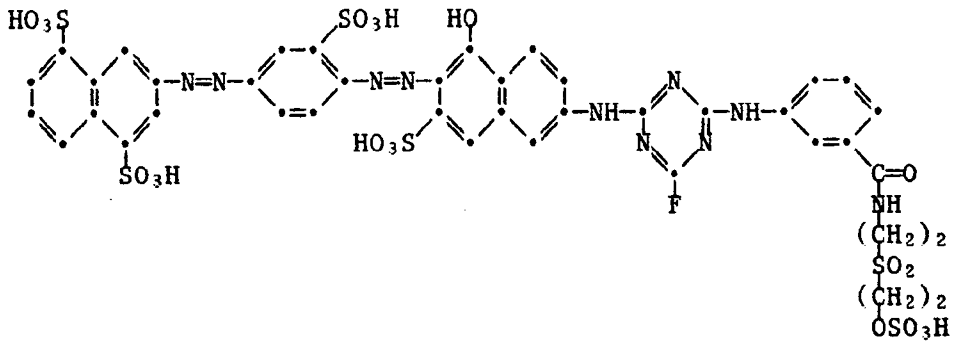

durch Eindampfen oder Gefriertrocknen der Reaktionslösung bei pH 7 isoliert. Er färbt Baumwolle in roten Tönen.

Beispiel 7:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 16 Teilen Cyanfluorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 40 Teile 4-Aminobenzoesäure-N′-β-(β′-sulfatoäthylsulfonyl)-äthylamid in 150 Teilen Wasser hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 49 Teilen diazotiertem Produkt folgender Formel

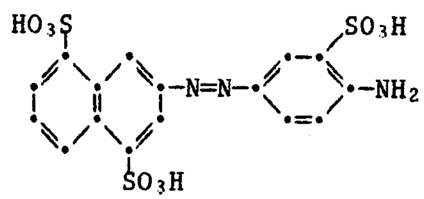

gekuppelt. Nach vollständiger Kupplungsreaktion bei pH 8 wird die Reaktionsmischung geklärt und der gebildete Reaktivfarbstoff der Formel

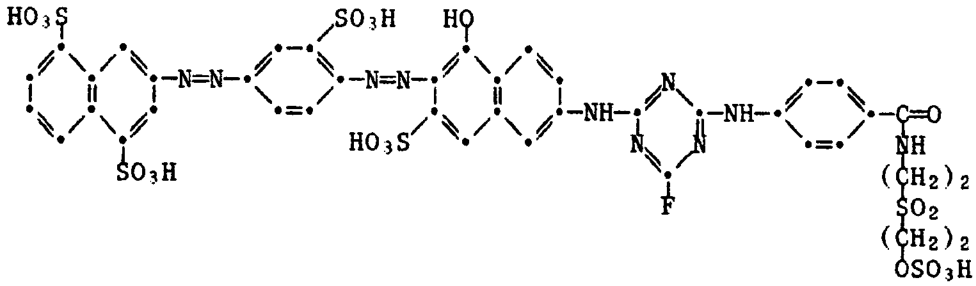

durch Eindampfen oder Gefriertrocknen der Reaktionslösung bei pH 7 isoliert. Er färbt Baumwolle in roten Tönen.

Beispiel 8

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 16 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 42 Teile 2,5-Bis-β-chloräthylsulfonyl-aminopentan-hydrochlorid als Pulver hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 49 Teilen diazotiertem Produkt folgender Formel

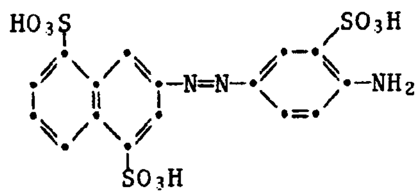

gekuppelt. Nach vollständiger Kupplungsreaktion bei pH 8 wird die Reaktionsmischung geklärt und der gebildete Reaktivfarbstoff der Formel

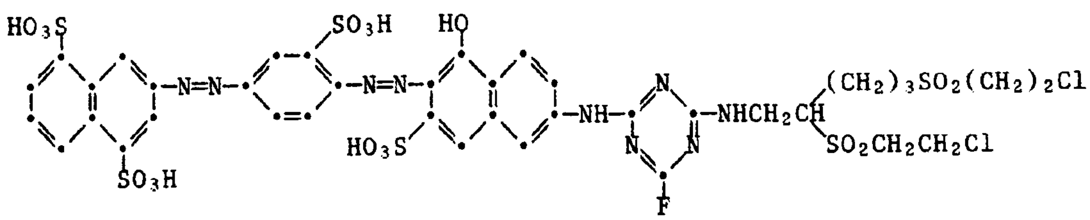

durch Eindampfen oder Gefriertrocknen der Reaktionslösung bei pH 7 isoliert. Er färbt Baumwolle in roten Tönen.

Nach den Verfahren der Beispiele 1 bis 8 können folgende Farbstoffe synthetisiert werden (Tabelle I):

Tabelle I

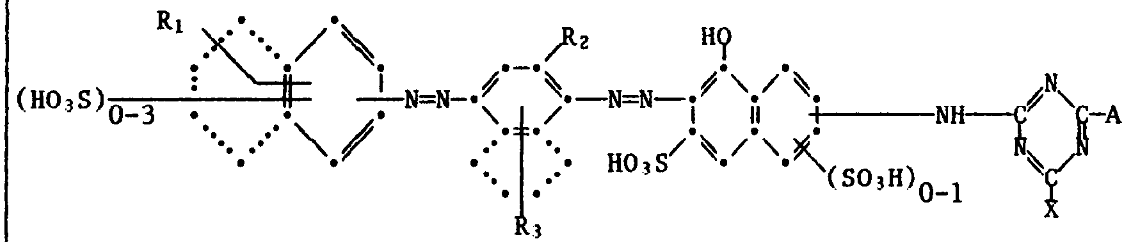

| Bsp. | 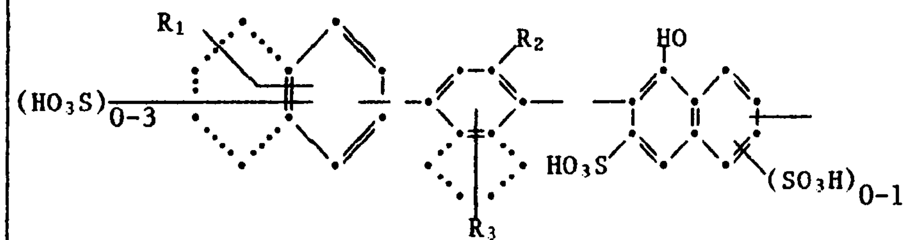 | X | A | Farbton |
|---|---|---|---|---|
| 9 | 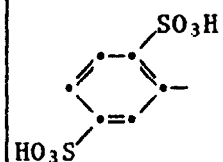 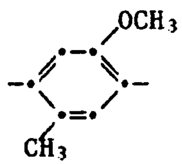 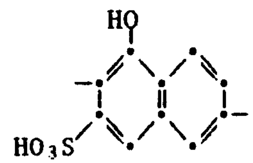 | Cl | 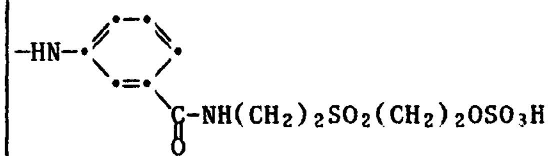 | violett |
| 10 | 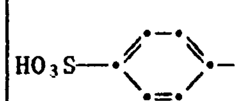 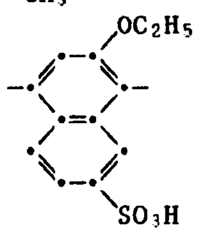 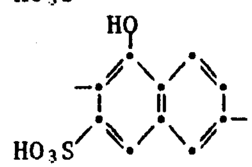 | Cl | 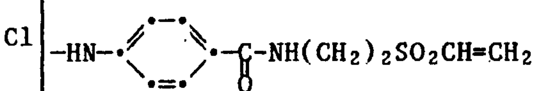 | rot-stichiges Blau |

| Bsp. | | | | X | A | Farbton |
|---|---|---|---|---|---|---|
| 11 | 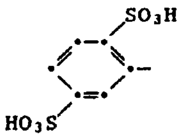 | 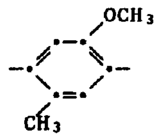 | 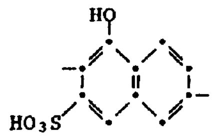 | -Cl | 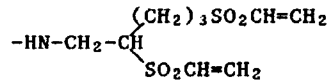 | violett |
| 12 | 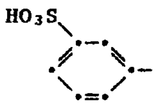 | 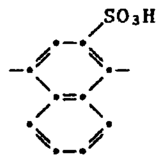 | 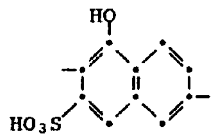 | Cl | 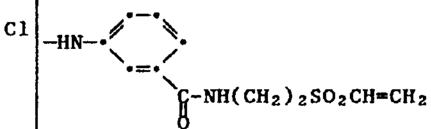 | violett |
| 13 | 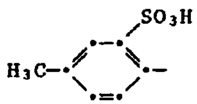 | 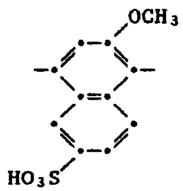 | 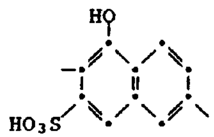 | Cl | 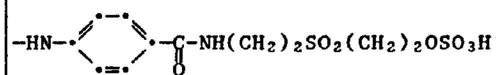 | rot-stichiges Blau |
| 14 | 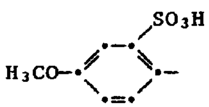 | 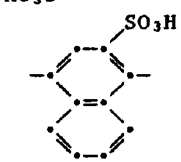 | 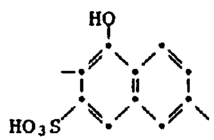 | Cl | 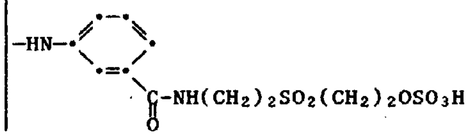 | rot |

| Bsp. | | | | X | A | Farbton |
|---|---|---|---|---|---|---|
| 15 | 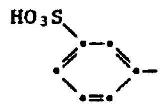 | 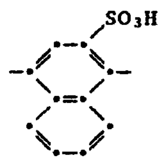 | 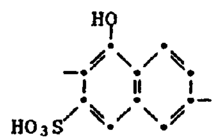 | Cl | O<br>$-HN-(CH_2)_2O(CH_2)_2SO_2CH=CH_2$ | violett |
| 16 | 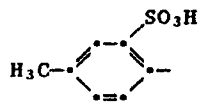 | 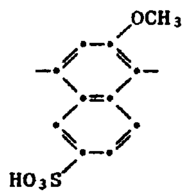 | 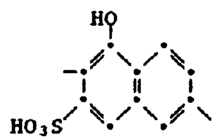 | Cl | $-HN-(CH_2)_2O(CH_2)_2SO_2CH=CH_2$ | rot-stichiges Blau |
| 17 | 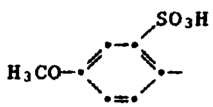 | 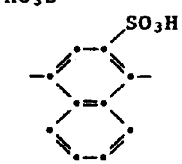 | 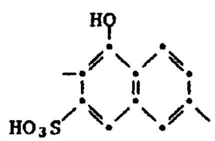 | Cl | $(CH_2)_3SO_2CH=CH_2$<br>$-HN-CH_2-CH$<br>$SO_2CH=CH_2$ | rot |
| 18 | 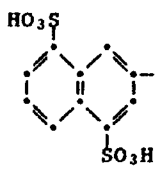 | 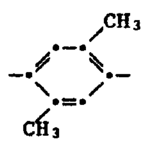 | 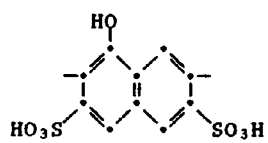 | Cl | $-HN(CH_2)_2O(CH_2)_2SO_2CH=CH_2$ | violett |

| Bsp. | | | | X | A | Farbton |
|---|---|---|---|---|---|---|
| 19 | 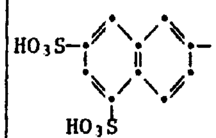 | 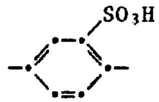 | 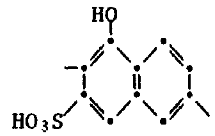 | Cl | 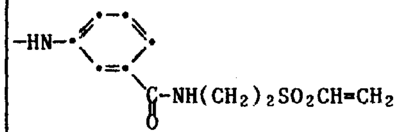 | rot |
| 20 | 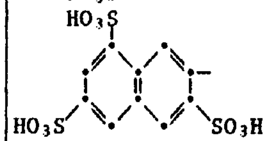 | 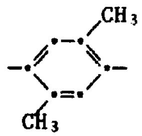 | 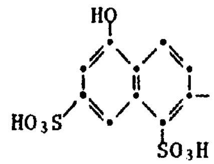 | Cl | 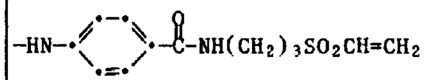 | violett |
| 21 | 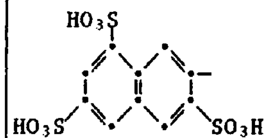 | 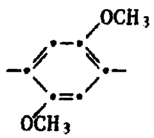 | 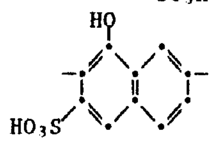 | Cl | 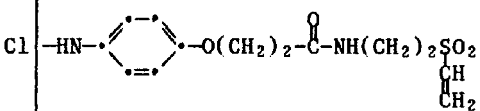 | blau |
| 22 | 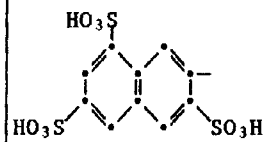 | 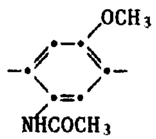 | 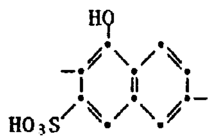 | Cl | 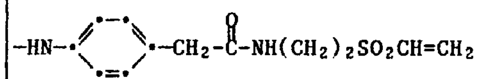 | blau |
| 23 | 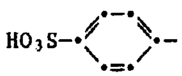 | 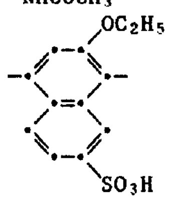 | 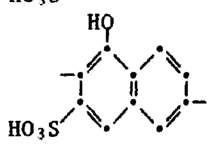 | Cl | $-HN-(CH_2)_2O(CH_2)_2SO_2CH=CH_2$ | rot-stichi-ges Blau |

| Bsp. | | | | X | A | Farbton |
|---|---|---|---|---|---|---|
| 24 | 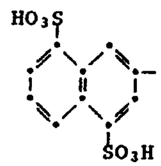 | 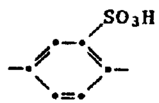 | 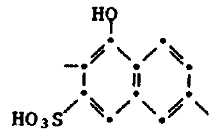 | Cl | 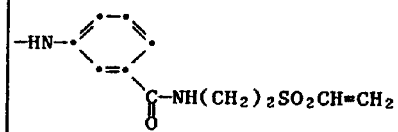 | rot |
| 25 | 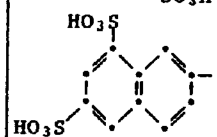 | 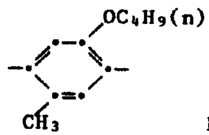 | 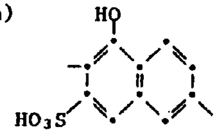 | Cl | 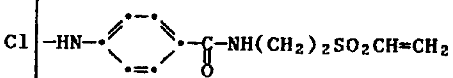 | rot-stichiges Blau |
| 26 | 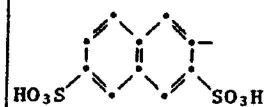 | 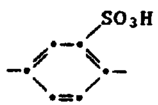 | 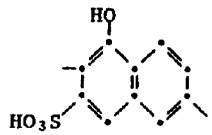 | Cl | $-HN(CH_2)_2O(CH_2)_2SO_2CH{=}CH_2$ | rot |
| 27 | 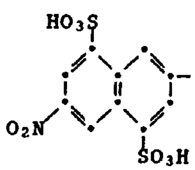 | 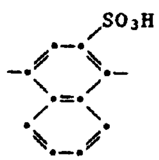 | 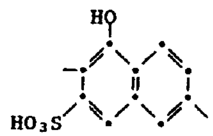 | Cl | 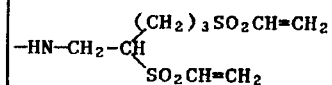 | rot |
| 28 | 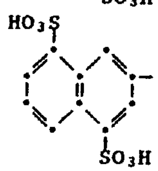 | 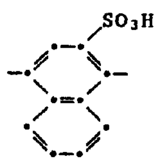 | 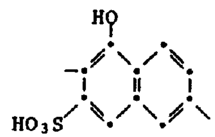 | Cl | 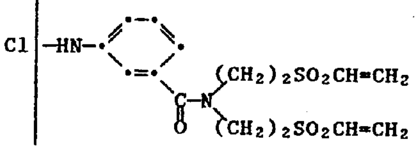 | rot |

| Bsp. | | X | A | Farbton |
|---|---|---|---|---|
| 29 | 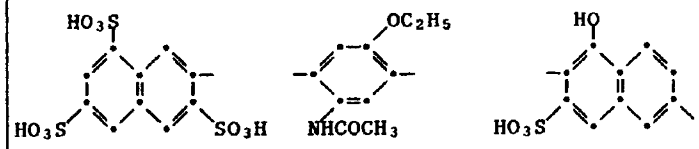 | Cl | 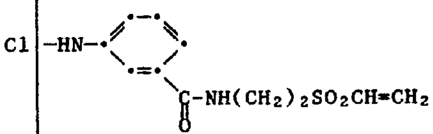 | rot-stichi-ges Blau |
| 30 | 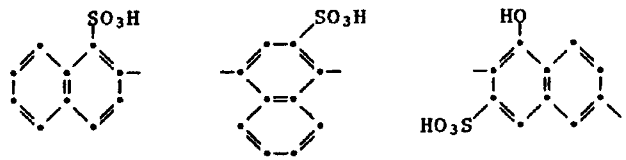 | Cl | 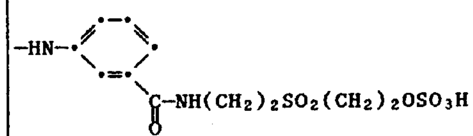 | rot |
| 31 | 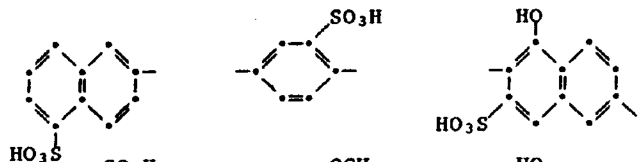 | Cl | 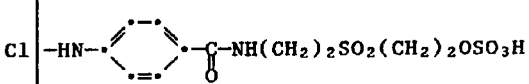 | rot |
| 32 | 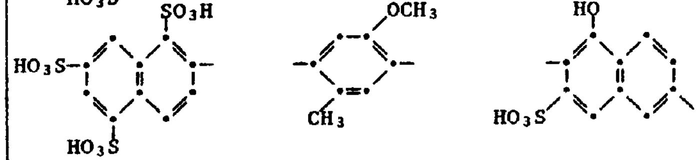 | Cl | $-HN(CH_2)_2O(CH_2)_2SO_2CH=CH_2$ | rot-stichi-ges Blau |
| 33 | 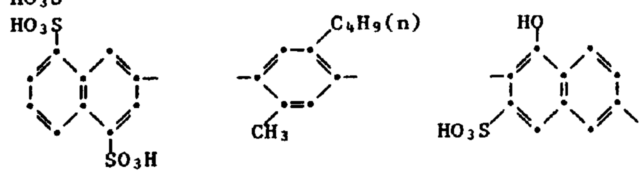 | Cl | 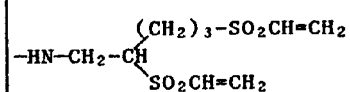 | violett |

| Bsp. | | | | X | A | Farbton |
|---|---|---|---|---|---|---|
| 34 | 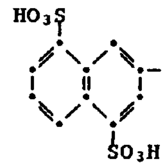 | 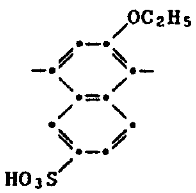 | 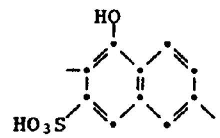 | Cl | 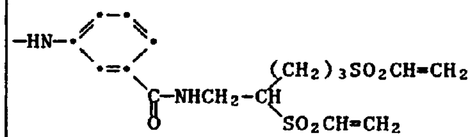 | rot-stichiges Blau |
| 35 | 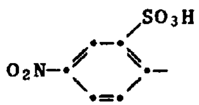 | 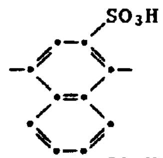 | 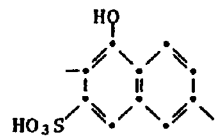 | Cl | 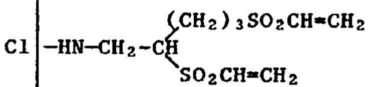 | rot |
| 36 | 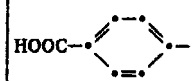 | 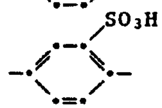 | 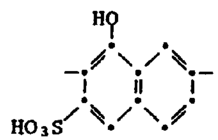 | Cl | 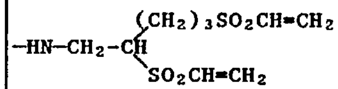 | blau-stichiges Rot |
| 37 | 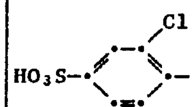 | 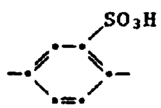 | 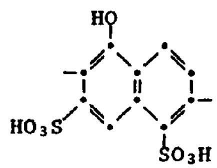 | Cl | 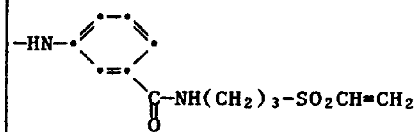 | rot |
| 38 | 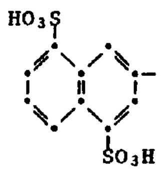 | 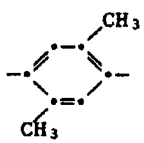 | 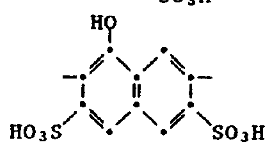 | Cl | 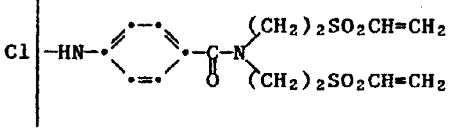 | violett |

| Bsp. | | X | A | Farbton |
|---|---|---|---|---|
| 39 | 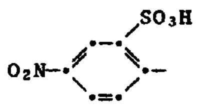 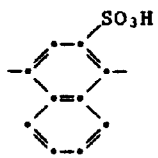 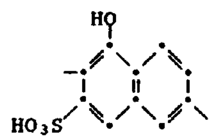 | Cl | 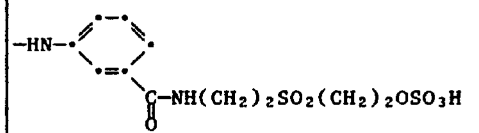 | rot |
| 40 | 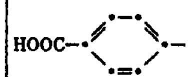 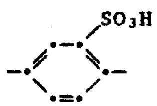 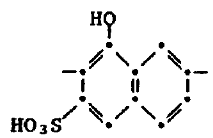 | Cl | 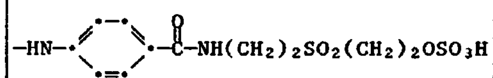 | blau stichi- ges Rot |
| 41 | 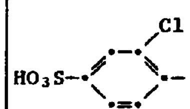 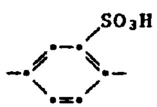 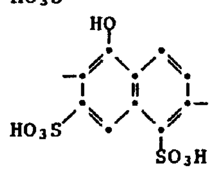 | Cl | $-HN-(CH_2)_2O(CH_2)_2SO_2CH=CH_2$ | rot |

Beispiel 42:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 26 Teile der Verbindung der Formel $HClH_2NCH_2CH_2OCH_2CH_2SO_2CH_2CH_2Cl$ hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 80 Teilen diazotiertem Produkt folgender Formel

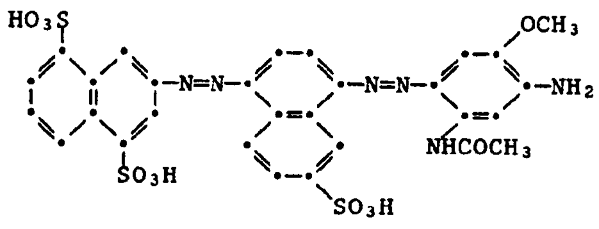

gekuppelt. Nach vollständiger Kupplungsreaktion bei pH 8 wird die Reaktionsmischung geklärt und der gebildete Reaktivfarbstoff der Formel

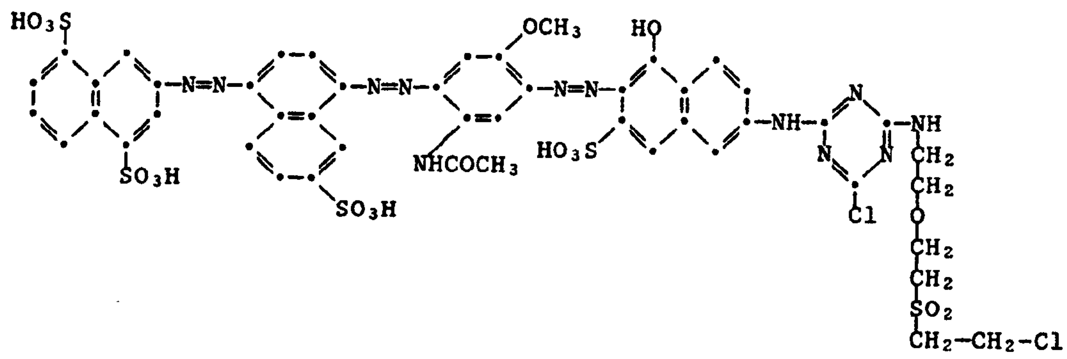

durch Eindampfen oder Gefriertrocknen der Reaktionslösung bei pH 7 isoliert. Er färbt Baumwolle in roten Tönen.

Beispiel 43:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 38 Teile 2,5-Bis-β-chloräthylsulfonyl-aminopentanhydrochlorid als Pulver hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 80 Teilen diazotiertem Produkt folgender Formel

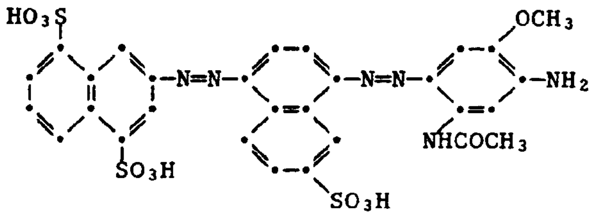

gekuppelt. Nach vollständiger Kupplungsreaktion bei pH 8 wird die Reaktionsmischung geklärt und der gebildete Reaktivfarbstoff der Formel

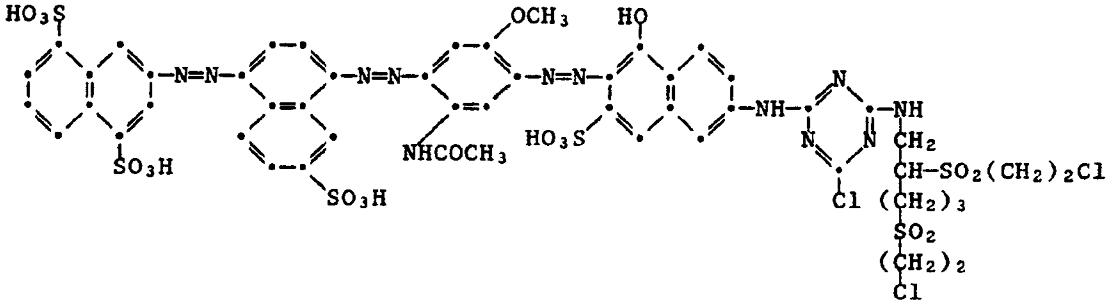

durch Eindampfen oder Gefriertrocknen der Reaktionslösung bei pH 7 isoliert. Er färbt Baumwolle in tiefen blauen Tönen.

<u>Beispiel 44:</u>

31,9 Teile 1,8-Aminonaphthol-3,6-disulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 38 Teile 2,5-Bis-β-chloräthylsulfonyl-aminopentanhydrochlorid als Pulver hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 68 Teilen diazotiertem Produkt folgender Formel

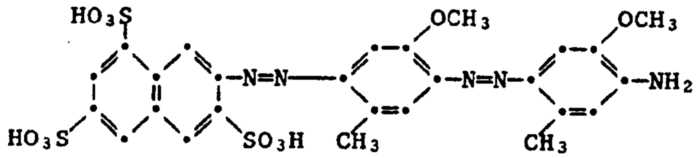

gekuppelt. Nach vollständiger Kupplungsreaktion bei pH 8 wird die Reaktionsmischung geklärt und der gebildete Reaktivfarbstoff der Formel

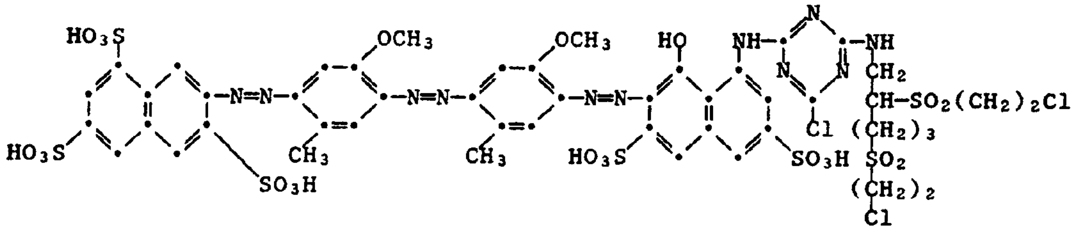

durch Eindampfen oder Gefriertrocknen der Reaktionslösung bei pH 7 isoliert. Er färbt Baumwolle in grünstichig

blauen Tönen.

Beispiel 45:

31,9 Teile 1,8-Aminonaphthol-3,6-disulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 26 Teile der Verbindung der Formel $HClH_2NCH_2CH_2$-O-$CH_2CH_2SO_2CH_2CH_2Cl$ hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 68 Teilen diazotiertem Produkt folgender Formel

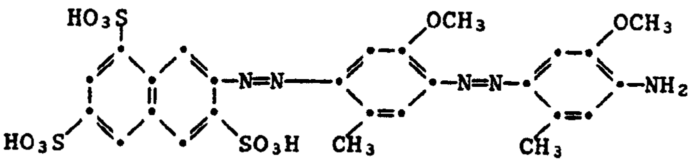

gekuppelt. Nach vollständiger Kupplungsreaktion bei pH 8 wird die Reaktionsmischung geklärt und der gebildete Reaktivfarbstoff der Formel

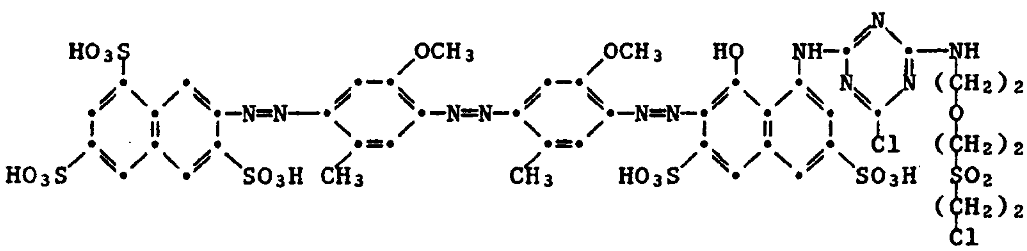

durch Eindampfen oder Gefriertrocknen der Reaktionslösung bei pH 7 isoliert. Er färbt Baumwolle in grünstichig blauen Tönen.

Beispiel 46:

31,9 Teile 1,8-Aminonaphthol-3,6-disulfonsäure werden unter Zusatz von Natriumhydroxyd neutral gelöst, und die Lösung wird zu einer eiskalten wässrigen Suspension von 16 Teilen Cyanfluorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 42 Teile 2,5-Bis-β-chloräthylsulfonyl-aminopentan-hydrochlorid hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 68 Teilen diazotiertem Produkt folgender Formel

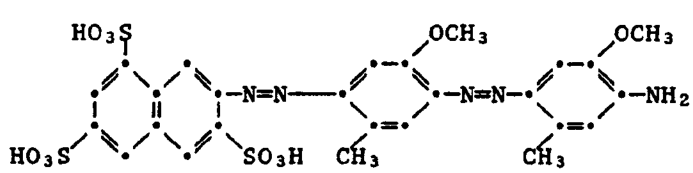

gekuppelt. Nach vollständiger Kupplungsreaktion bei pH 8 wird die Reaktionsmischung geklärt und der gebildete Reaktivfarbstoff der Formel

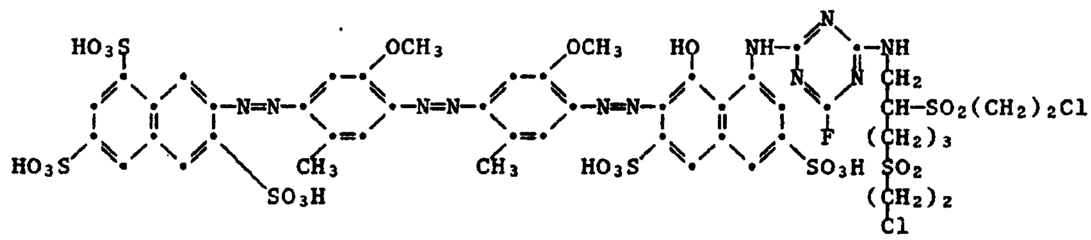

durch Eindampfen oder Gefriertrocknen der Reaktionslösung bei pH 7 isoliert. Er färbt Baumwolle in grünstichig blauen Tönen.

Beispiel 47:

23,9 Teile 2-Amino-5-hydroxynaphthalin-sulfonsäure werden unter Zusatz von Natriumhydroxyd neutral gelöst, und die Lösung wird zu einer eiskalten wässrigen Suspension von 16 Teilen Cyanurfluorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 40 Teile der Verbindung der Formel $HClH_2NCH_2CH_2OCH_2CH_2SO_2CH_2CH_2Cl$ hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bei 10° und pH 6,5 mit 80 Teilen diazotiertem Produkt folgender Formel

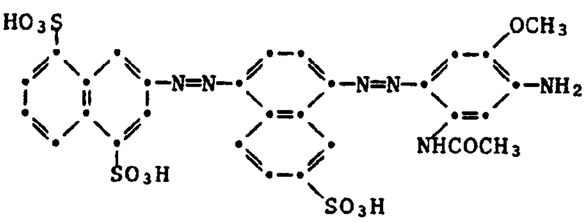

gekuppelt. Nach vollständiger Kupplungsreaktion bei pH 8 wird die Reaktionsmischung geklärt und der gebildete Reaktivfarbstoff der Formel

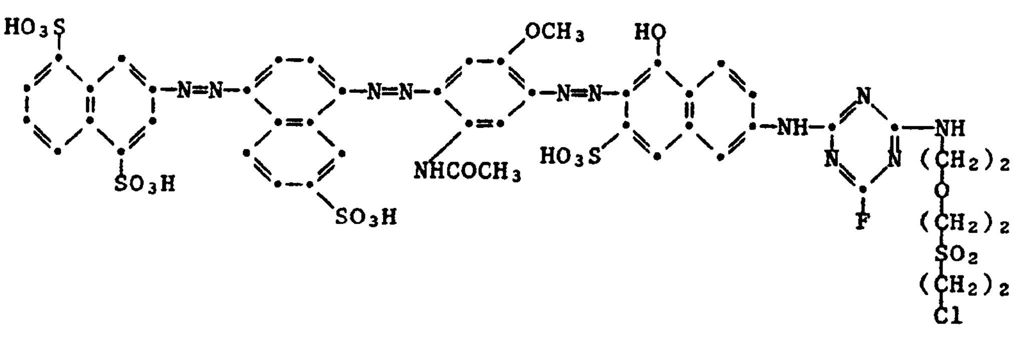

durch Eindampfen oder Gefriertrocknen der Reaktionslösung bei pH 7 isoliert. Er färbt Baumwolle in dunkelblauen Tönen.

Beispiel 48:

31,9 Teile 1,8-Aminonaphthol-3,6-disulfonsäure werden unter Zusatz von Natriumhydroxyd neutral gelöst, und die Lösung wird zu einer eiskalten wässrigen Suspension von 16 Teilen Cyanurfluorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 40 Teile

der Verbindung der Formel $HClH_2NCH_2CH_2OCH_2CH_2SO_2CH_2CH_2Cl$ hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 68 Teilen diazotiertem Produkt folgender Formel

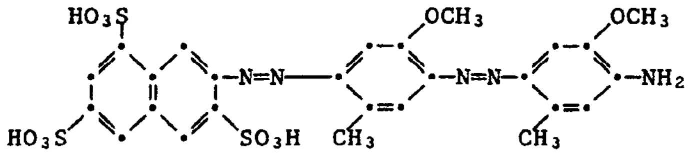

gekuppelt. Nach vollständiger Kupplungsreaktion bei pH 8 wird die Reaktionsmischung geklärt und der gebildete Reaktivfarbstoff der Formel

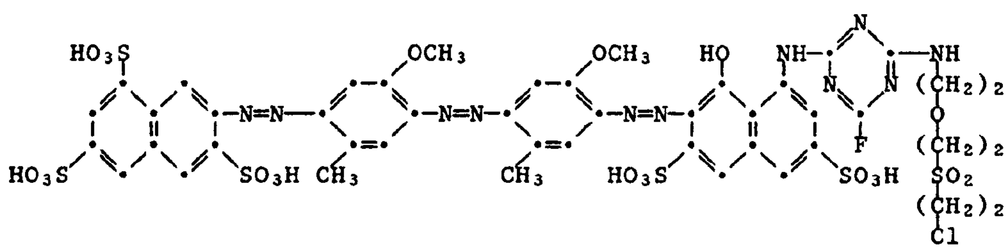

durch Eindampfen oder Gefriertrocknen der Reaktionslösung bei pH 7 isoliert. Er färbt Baumwolle in grünstichig blauen Tönen.

Beispiel 49:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 16 Teilen Cyanurfluorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 42 Teile 2,5-Bis-β-chloräthylsulfonyl-aminopentan-hydrochlorid hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 80 Teilen diazotiertem Produkt folgender Formel

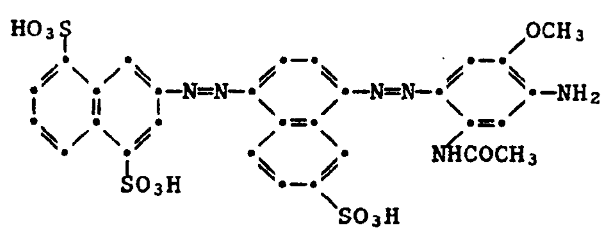

gekuppelt. Nach vollständiger Kupplungsreaktion bei pH 8 wird die Reaktionsmischung geklärt und der gebildete Reaktivfarbstoff der Formel

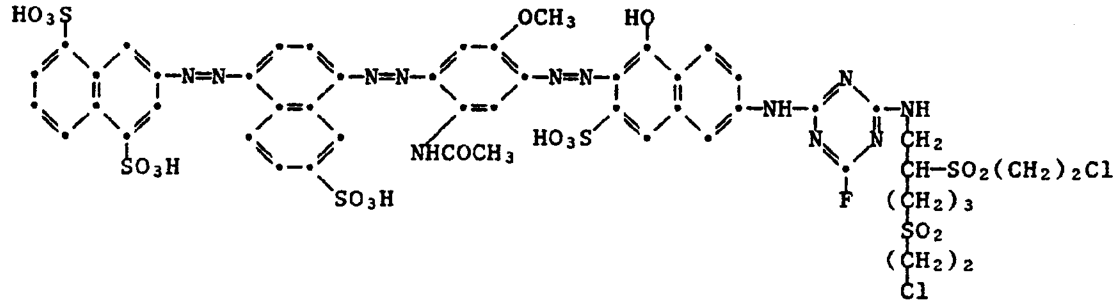

durch Eindampfen oder Gefriertrocknen der Reaktionslösung bei pH 7 isoliert. Er färbt Baumwolle in dunkelblauen Tönen.

Beispiel 50:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 16 Teilen Cyanurfluorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 40 Teile 3-Aminobenzoesäure-N'-β-(β'-sulfatoäthylsulfonyl)-äthylamid in 150 Teilen Wasser hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 80 Teilen diazotiertem Produkt folgender Formel

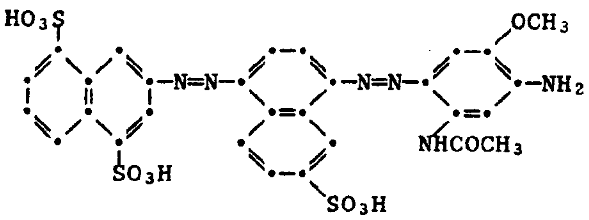

gekuppelt. Nach vollständiger Kupplungsreaktion bei pH 8 wird die Reaktionsmischung geklärt und der gebildete Reaktivfarbstoff der Formel

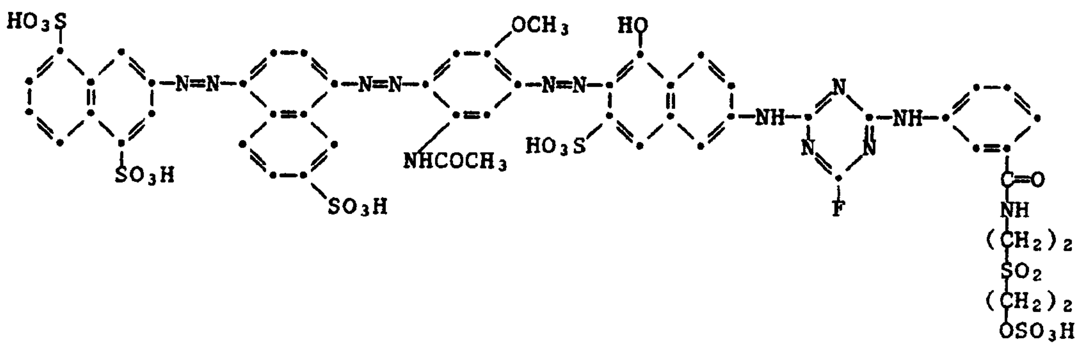

durch Eindampfen oder Gefriertrocknen der Reaktionslösung bei pH 7 isoliert. Er färbt Baumwolle in dunkelblauen Tönen.

Beispiel 51:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 16 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 36 Teile 3-Aminobenzoesäure-N′-β-(β′-sulfatoäthylsulfonyl)-äthylamid in 150 Teilen Wasser hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 80 Teilen diazotiertem Produkt folgender Formel

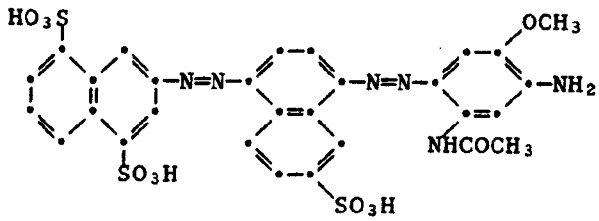

gekuppelt. Nach vollständiger Kupplungsreaktion bei pH 8 wird die Reaktionsmischung geklärt und der gebildete Reaktivfarbstoff der Formel

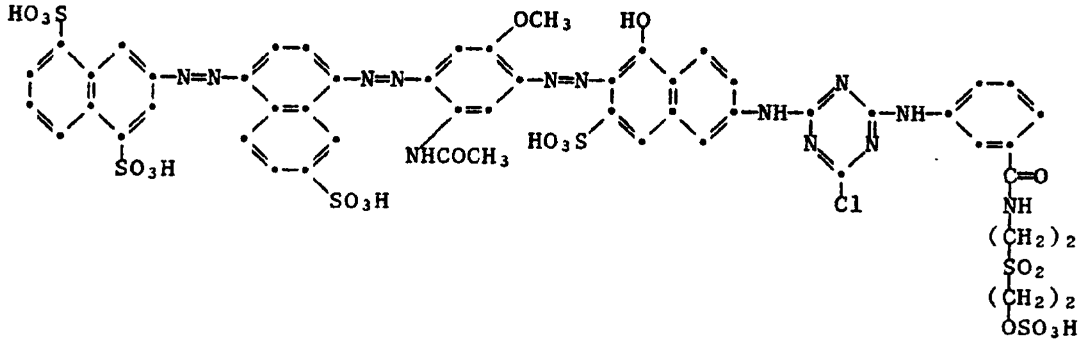

durch Eindampfen oder Gefriertrocknen der Reaktionslösung bei pH 7 isoliert. Er färbt Baumwolle in dunkelblauen Tönen.

Beispiel 52:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 16 Teilen Cyanurfluorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 40 Teile 4-Aminobenzoesäure-N′-β-(β′-sulfatoäthylsulfonyl)-äthylamid in 150 Teilen Wasser hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 80 Teilen diazotiertem Produkt folgender Formel

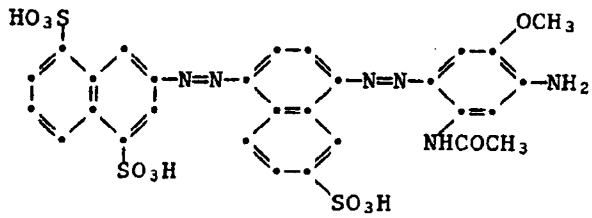

gekuppelt. Nach vollständiger Kupplungsreaktion bei pH 8 wird die Reaktionsmischung geklärt und der gebildete Reaktivfarbstoff der Formel

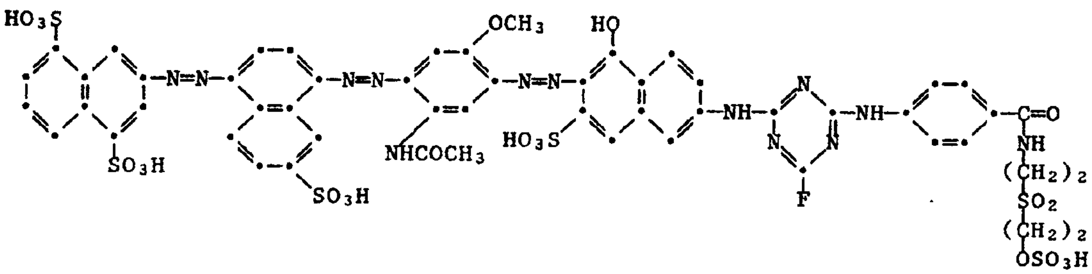

durch Eindampfen oder Gefriertrocknen der Reaktionslösung bei pH 7 isoliert. Er färbt Baumwolle in dunkelblauen Tönen.

Beispiel 53:

23,9 Teile 2-Amino-5-hydroxynaphthalin-7-sulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 36 Teile 4-Aminobenzoesäure-N′-β-(β′-sulfatoäthylsulfonyl)-äthylamid in 150 Teilen Wasser hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 80 Teilen diazotiertem Produkt folgender Formel

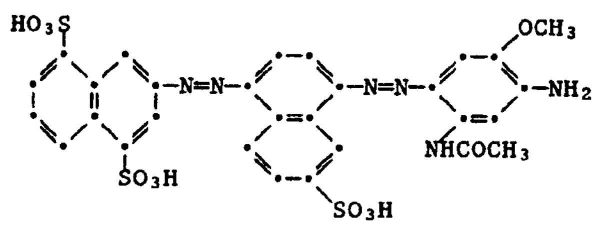

gekuppelt. Nach vollständiger Kupplungsreaktion bei pH 8 wird die Reaktionsmischung geklärt und der gebildete Reaktivfarbstoff der Formel

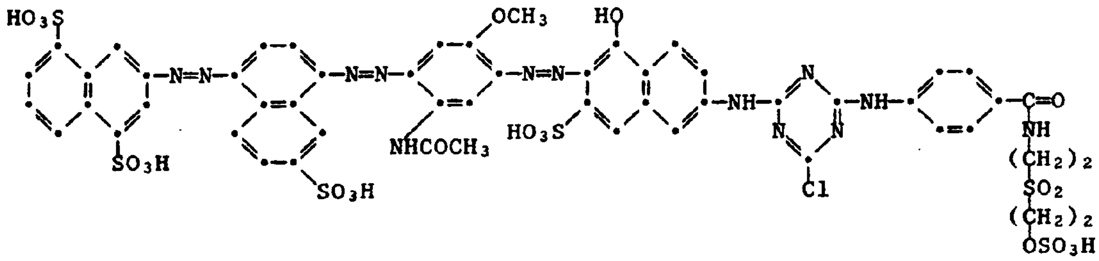

durch Eindampfen oder Gefriertrocknen der Reaktionslösung bei pH 7 isoliert. Er färbt Baumwolle in dunkelblauen Tönen.

Beispiel 54:

31,9 Teile 1,8-Aminonaphthol-3,6-disulfonsäure werden unter Zusatz von Natriumhydroxyd neutral gelöst, und die Lösung wird zu einer eiskalten wässrigen Suspension von 16 Teilen Cyanurfluorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 40 Teile 3-Aminobenzoesäure-N'-β-(β'-sulfatoäthylsulfonyl)-äthylamid in 100 Teilen Wasser hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 68 Teilen diazotiertem Produkt folgender Formel

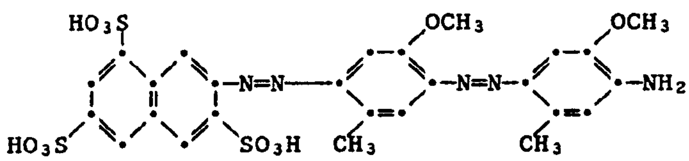

gekuppelt. Nach vollständiger Kupplungsreaktion bei pH 8 wird die Reaktionsmischung geklärt und der gebildete Reaktivfarbstoff der Formel

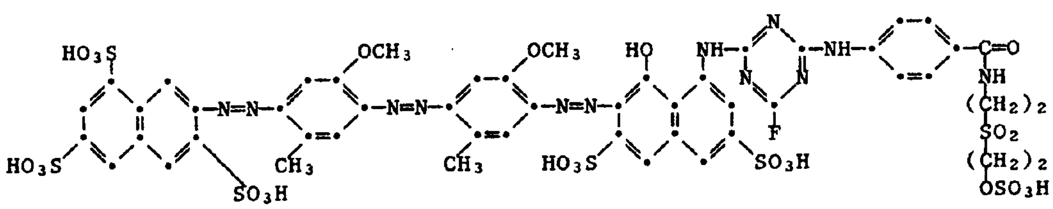

durch Eindampfen oder Gefriertrocknen der Reaktionslösung bei pH 7 isoliert. Er färbt Baumwolle in grünstichig blauen Tönen.

Beispiel 55:

31,9 Teile 1,8-Aminonaphthol-3,6-disulfonsäure werden unter Zusatz von Natriumhydroxyd neutral gelöst, und die Lösung wird zu einer eiskalten wässrigen Suspension von 16 Teilen Cyanurfluorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 40 Teile 3-Aminobenzoesäure-N'-β-(β'-sulfatoäthylsulfonyl)-äthylamid in 100 Teilen Wasser hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 68 Teilen diazotiertem

Produkt folgender Formel

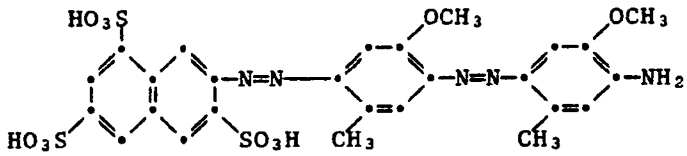

gekuppelt. Nach vollständiger Kupplungsreaktion bei pH 8 wird die Reaktionsmischung geklärt und der gebildete Reaktivfarbstoff der Formel

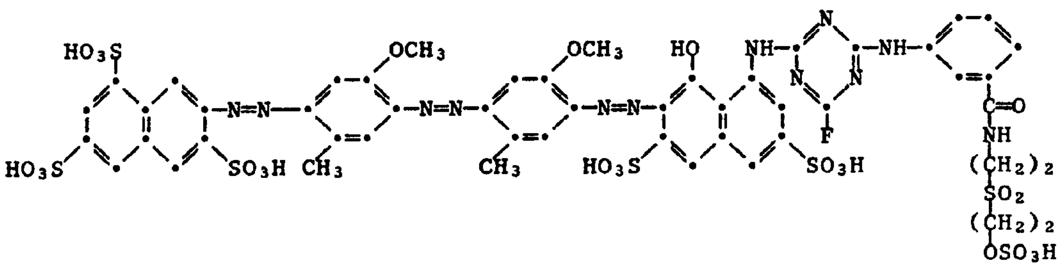

durch Eindampfen oder Gefriertrocknen der Reaktionslösung bei pH 7 isoliert. Er färbt Baumwolle in grünstichig blauen Tönen.

Beispiel 56:

31,9 Teile 1,8-Aminonaphthol-3,6-disulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 36 Teile 3-Aminobenzoesäure-N'-β-(β'-sulfatoäthylsulfonyl)-äthylamid in 100 Teilen Wasser hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 68 Teilen diazotiertem Produkt folgender Formel

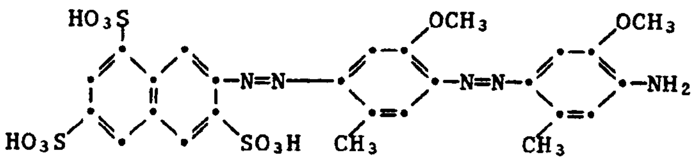

gekuppelt. Nach vollständiger Kupplungsreaktion bei pH 8 wird die Reaktionsmischung geklärt und der gebildete Reaktivfarbstoff der Formel

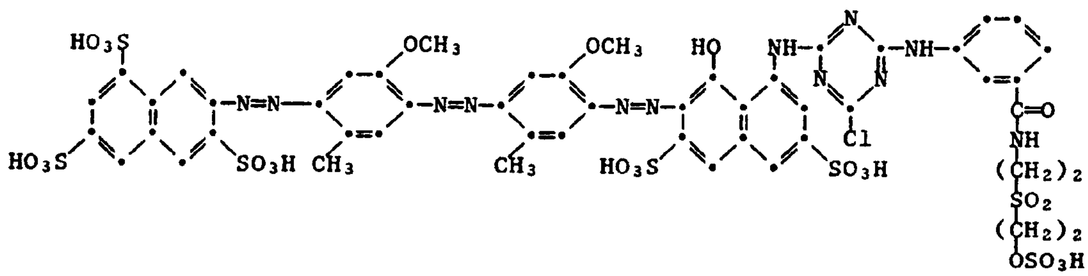

durch Eindampfen oder Gefriertrocknen der Reaktionslösung bei pH 7 isoliert. Er färbt Baumwolle in grünstichig blauen Tönen.

Beispiel 57:

31,9 Teile 1,8-Aminonaphthol-3,6-disulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man 36 Teile 4-Aminobenzoesäure-N'-β-(β'-sulfatoäthylsulfonyl)-äthylamid in 100 Teilen Wasser hinzu. Der pH der Reaktionsmischung wird durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 68 Teilen diazotiertem Produkt folgender Formel

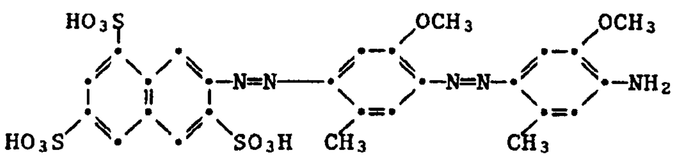

gekuppelt. Nach vollständiger Kupplungsreaktion bei pH 8 wird die Reaktionsmischung geklärt und der gebildete Reaktivfarbstoff der Formel

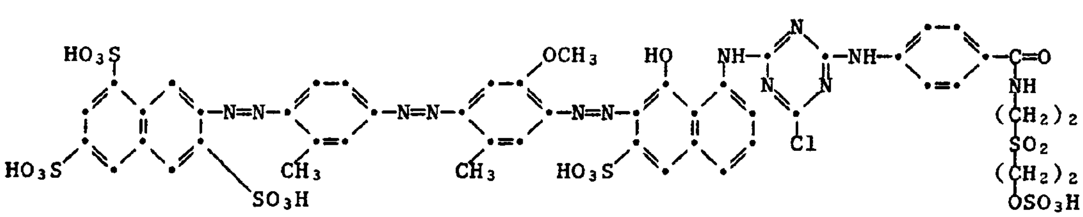

durch Eindampfen oder Gefriertrocknen der Reaktionslösung bei pH 7 isoliert. Er färbt Baumwolle in grünstichig blauen Tönen.

Nach den Verfahren der Beispiele 42 bis 57 können folgende Farbstoffe synthetisiert werden (Tabelle II):

Tabelle II

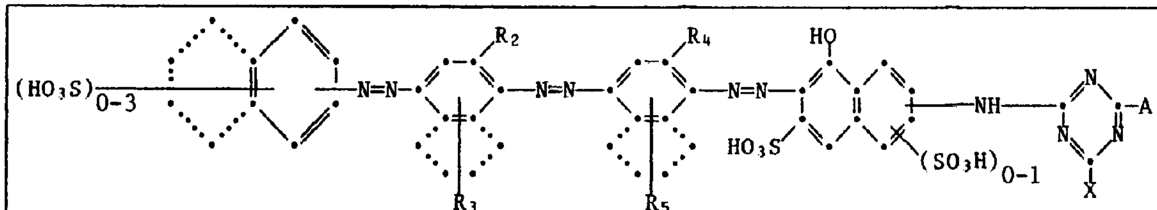

| Bsp. | 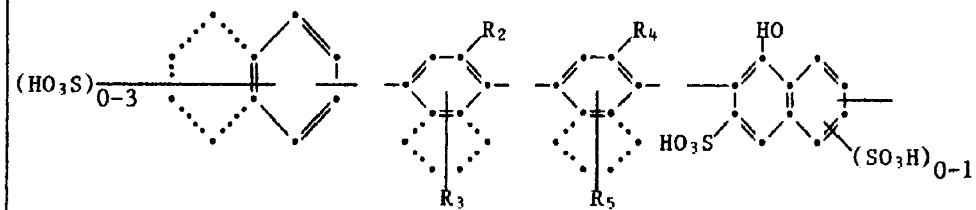 | X | A | Farbton |
|---|---|---|---|---|
| 58 | 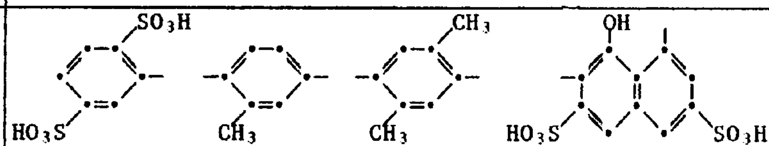 | Cl | 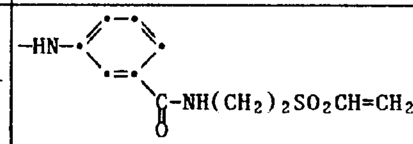 | Blau |
| 59 | 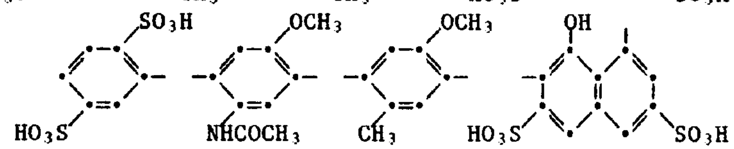 | Cl | 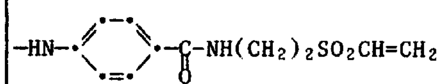 | grünstichiges Blau |
| 60 | 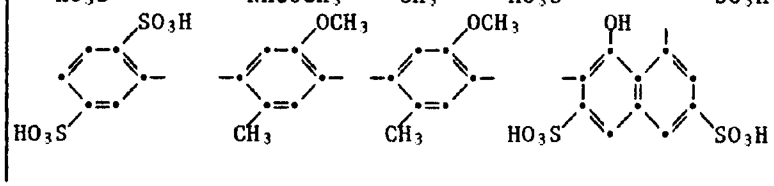 dito | Cl | 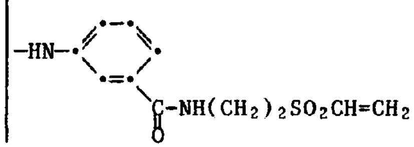 | dito |

| Bsp. | | X | A | Farbton |
|---|---|---|---|---|
| 61 | 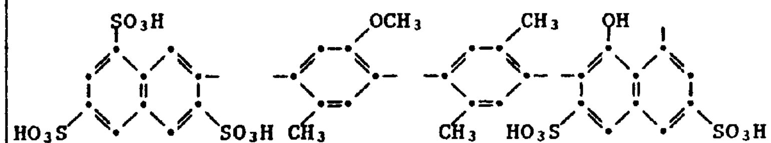 | Cl | 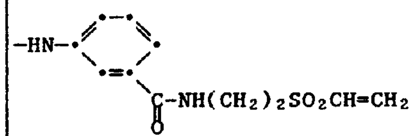 | grün-stichi-ges Blau |
| 62 | 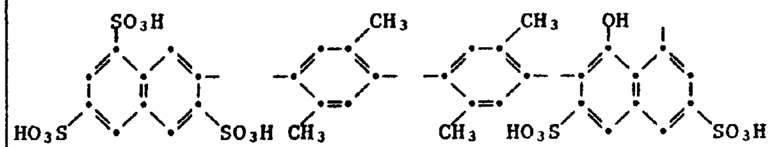 | Cl | 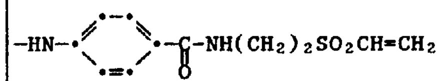 | dito |
| 63 | 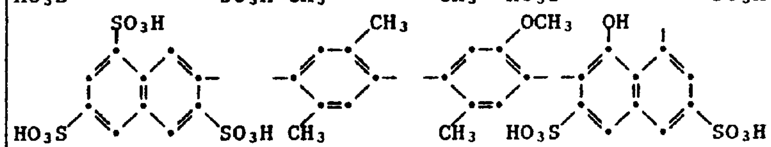 | Cl | $-HN-(CH_2)_2O(CH_2)_2SO_2CH=CH_2$ | dito |
| 64 | 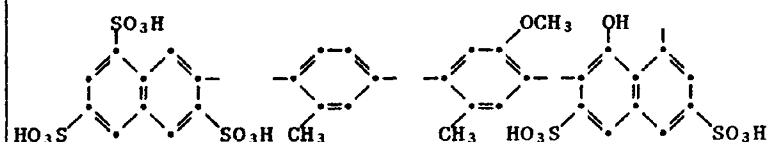 | Cl | 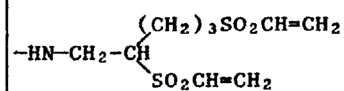 | dito |
| 65 | 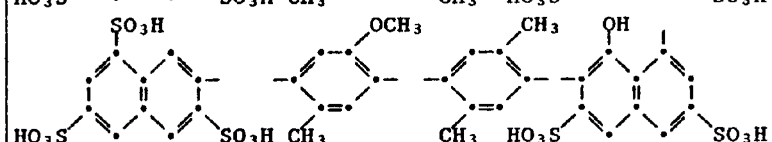 | Cl | 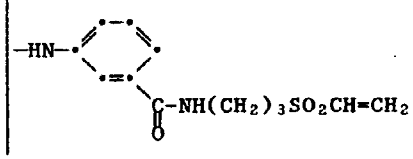 | dito |

| Bsp. | | X | A | Farbton |
|---|---|---|---|---|
| 66 | 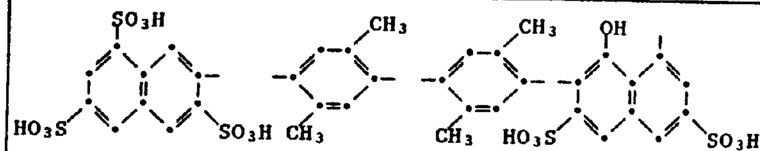 | F | 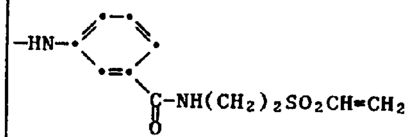 | grün-stichiges Blau |
| 67 | 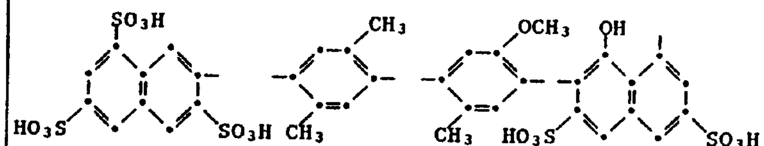 | F | 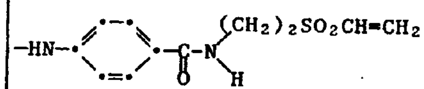 | dito |
| 68 | 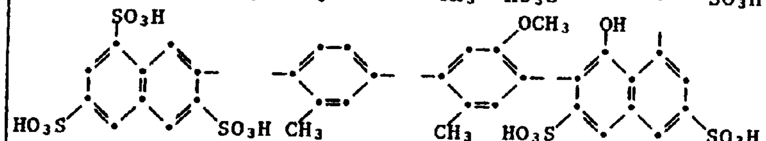 | F | $-HN-(CH_2)_2O(CH_2)_2SO_2CH=CH_2$ | dito |
| 69 | 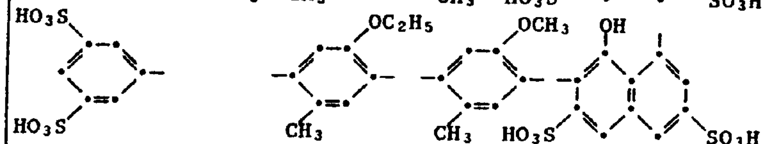 | F | 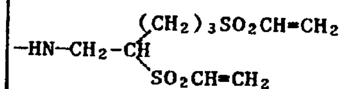 | dito |
| 70 | 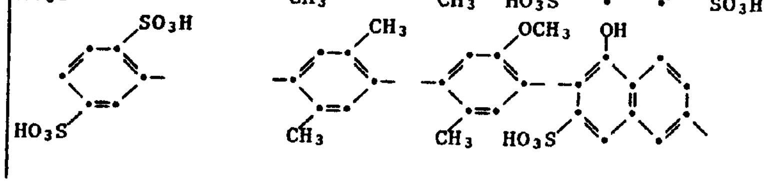 | F | 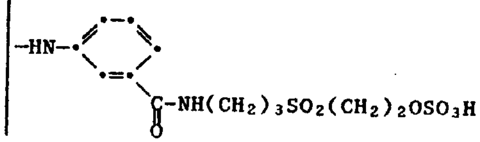 | rot-stichiges Blau |

| Bsp. | | X | A | Farbton |
|---|---|---|---|---|
| 71 | 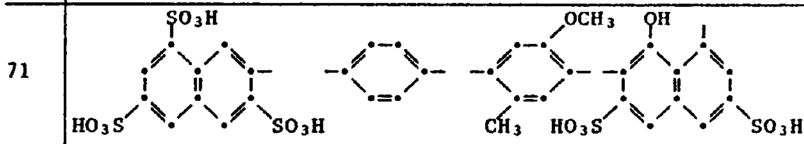 | Cl | 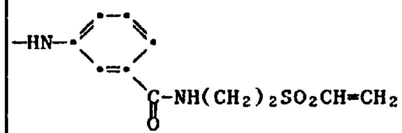 | Blau |
| 72 | 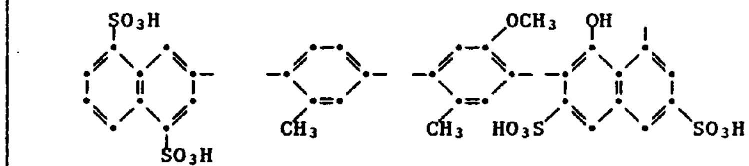 | Cl | 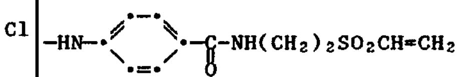 | grün-stichi-ges Blau |
| 73 | 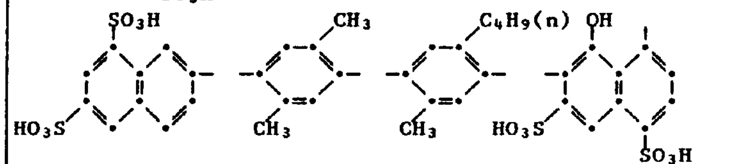 | Cl | 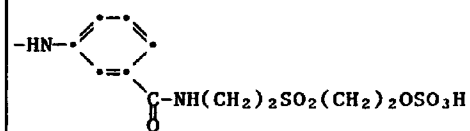 | Blau |
| 74 | 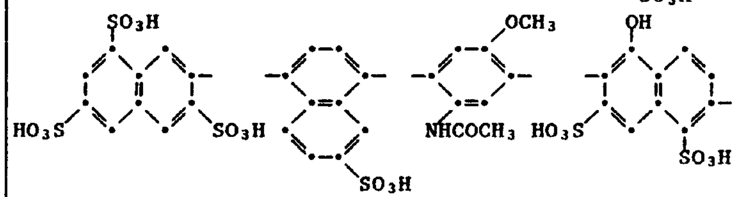 | Cl | $-HN-(CH_2)_2O(CH_2)_2SO_2CH{=}CH_2$ | rot-stichi-ges Blau |
| 75 | 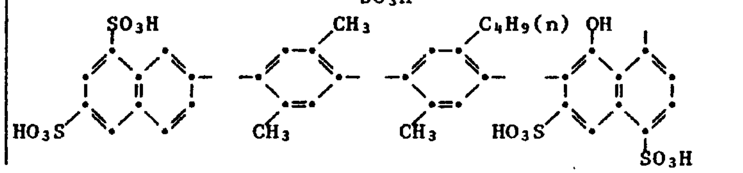 | Cl | $-HN(CH_2)_2O(CH_2)_2SO_2CH{=}CH_2$ | Blau |

| Bsp. | | X | A | Farbton |
|---|---|---|---|---|
| 76 | 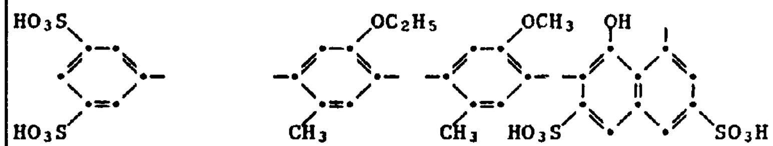 | Cl | 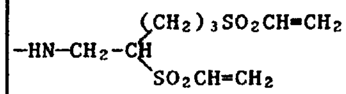 | grün-stichi-ges Blau |
| 77 | 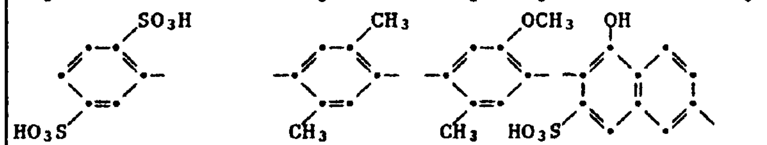 | Cl | 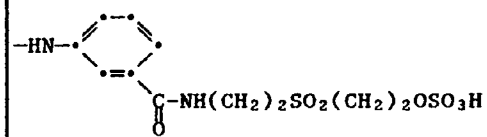 | rot-stichi-ges Blau |
| 78 | 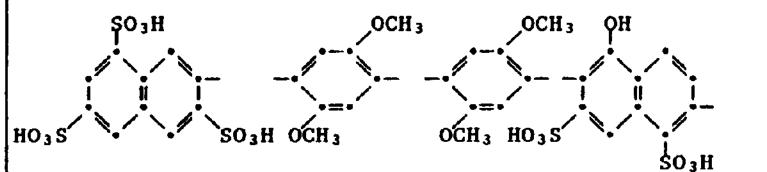 | Cl | $-HN-(CH_2)_2O(CH_2)_2SO_2CH{=}CH_2$ | Blau |
| 79 | 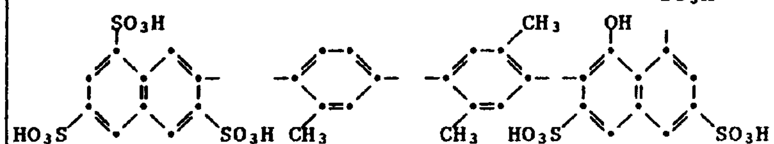 | Cl | 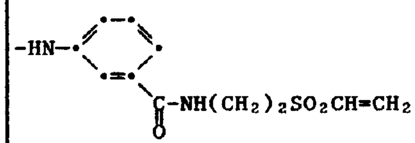 | Blau |
| 80 | 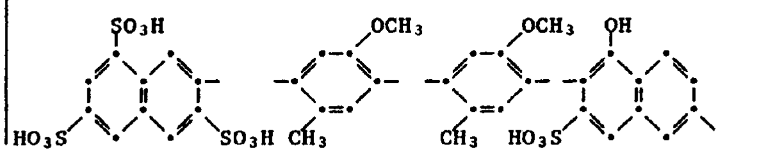 | F | 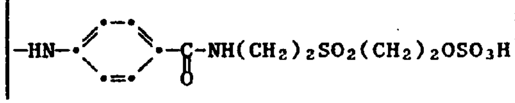 | dito |

| Bsp. | | X | A | Farbton |
|---|---|---|---|---|
| 81 | 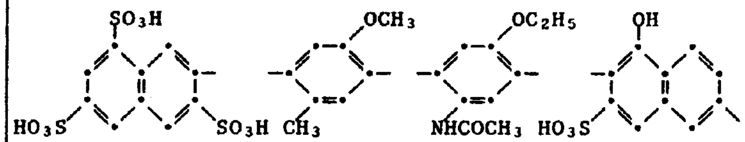 | F | $-HN-(CH_2)_2O(CH_2)_2SO_2CH{=}CH_2$ | dito |
| 82 | 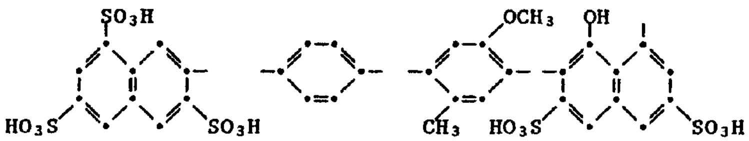 | F | 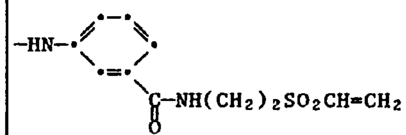 | grün-stichi-ges Blau |
| 83 | 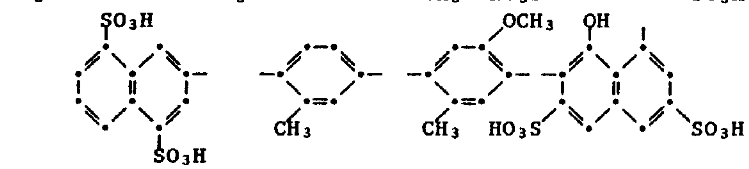 | F | 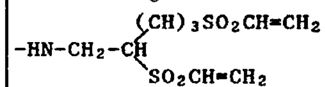 | dito |
| 84 | 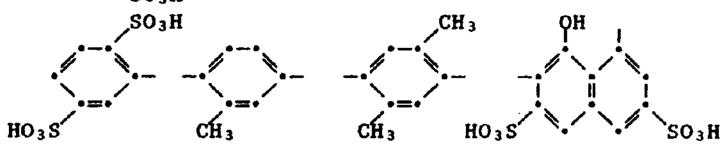 | Cl | 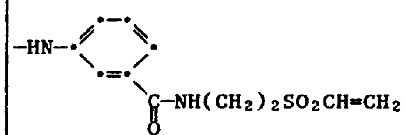 | Blau |
| 85 | 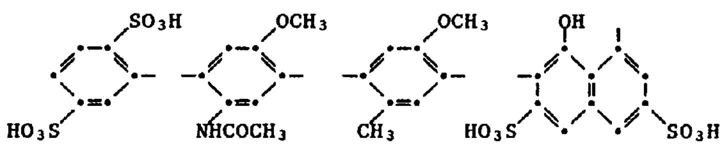 | Cl | 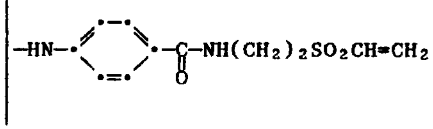 | grün-stichi-ges Blau |

| Bsp. | | X | A | Farbton |
|---|---|---|---|---|
| 86 | 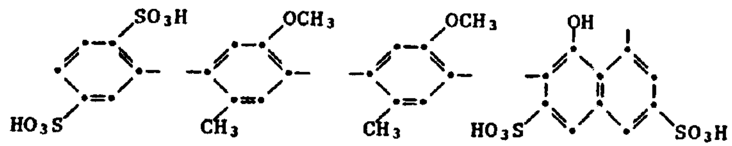 | F | 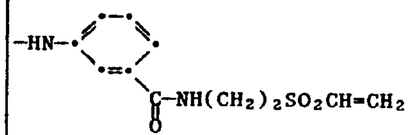 | dito |
| 87 | 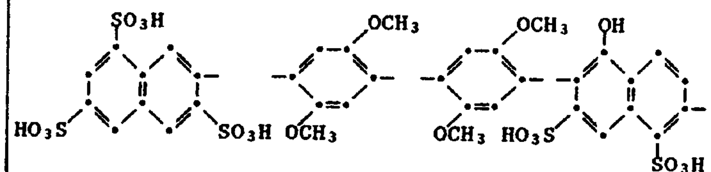 | Cl | $-HN-(CH_2)_2O(CH_2)_2SO_2CH=CH_2$ | Blau |
| 88 | 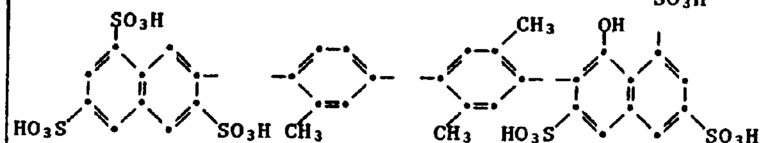 | Cl | 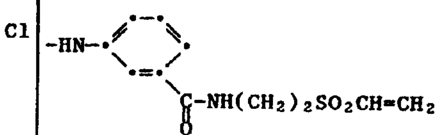 | dito |
| 89 | 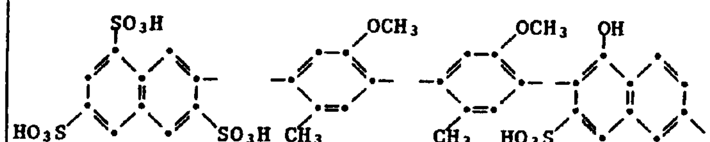 | Cl | 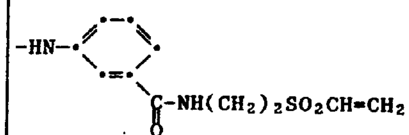 | dito |
| 90 | 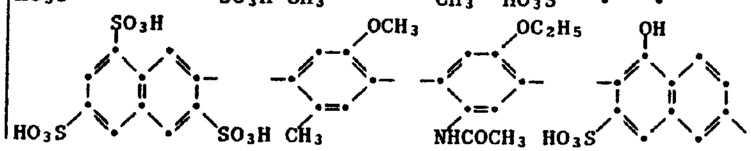 | Cl | $-HN-(CH_2)_2O(CH_2)_2SO_2CH=CH_2$ | dito |

| Bsp. | | X | A | Farbton |
|---|---|---|---|---|
| 91 | 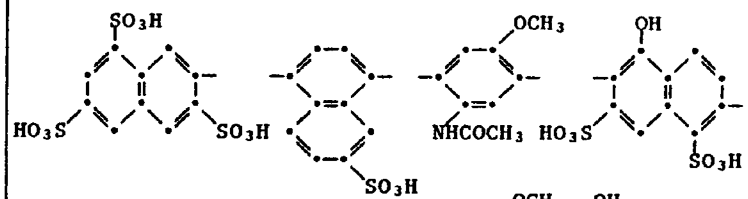 | Cl | 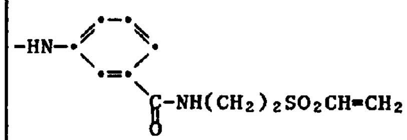 | Blau |
| 92 | 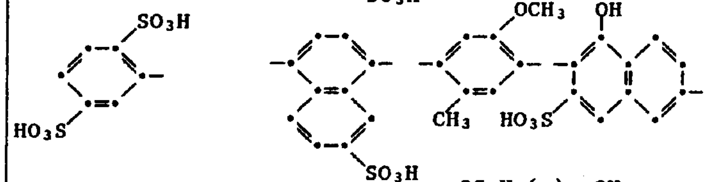 | Cl | 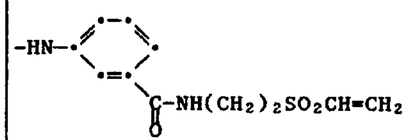 | rot-stichi-ges Blau |
| 93 | 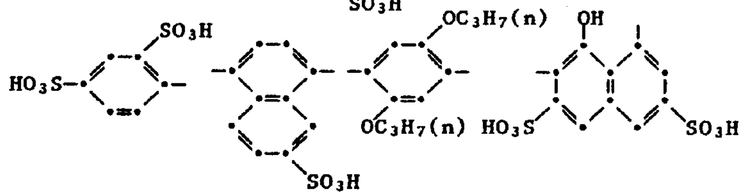 | F | 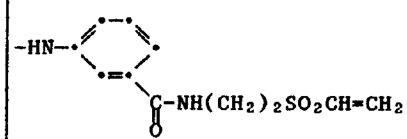 | grün-stichi-ges Blau |
| 94 | 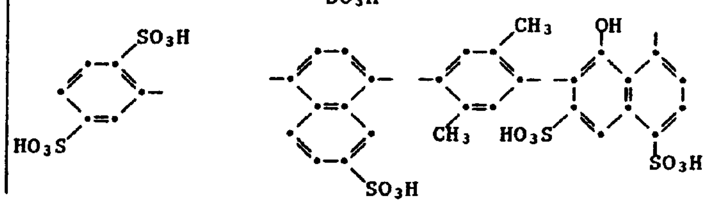 | F | 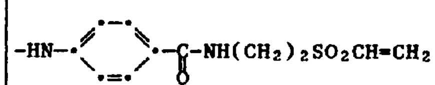 | Blau |

| Bsp. | | X | A | Farbton |
|---|---|---|---|---|
| 95 | 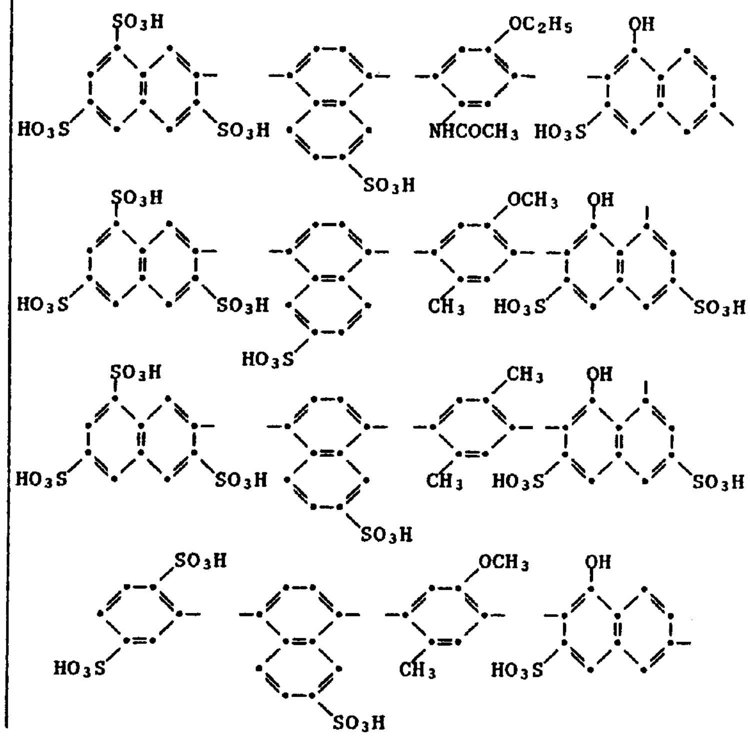 | Cl | $-HN(CH_2)_2O(CH_2)_2SO_2CH{=}CH_2$ | Blau |
| 96 | | Cl | $-HN-(CH_2)_2O(CH_2)_2SO_2CH{=}CH_2$ | grün-stichi-ges Blau |
| 97 | | Cl | $-HN(CH_2)_2O(CH_2)_2SO_2CH{=}CH_2$ | Blau |
| 98 | | Cl | $-HN-(CH_2)_2O(CH_2)_2SO_2CH{=}CH_2$ | dito |

| Bsp. | | X | A | Farbton |
|---|---|---|---|---|
| 99 | 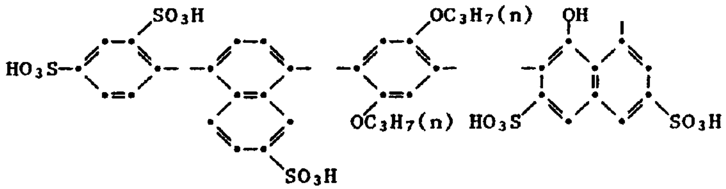 | Cl | $-HN(CH_2)_2O(CH_2)_2SO_2CH=CH_2$ | dito |
| 100 | 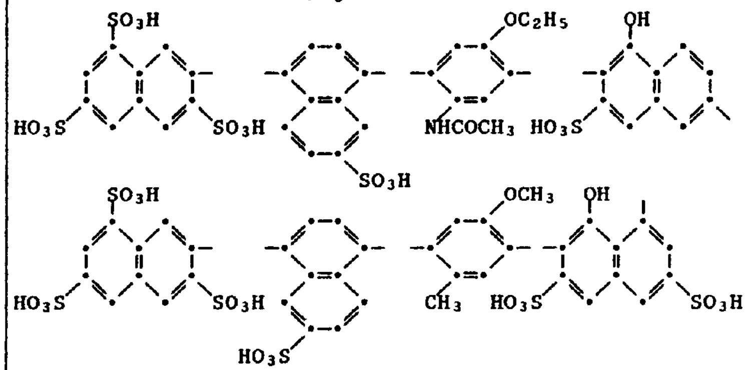 | Cl | 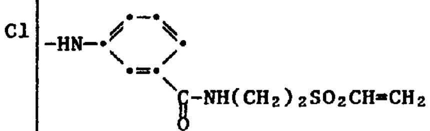 | grün-stichi-ges Blau |
| 101 | | F | 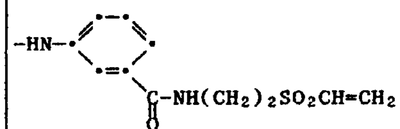 | grün-stichi-ges Blau |
| 102 | 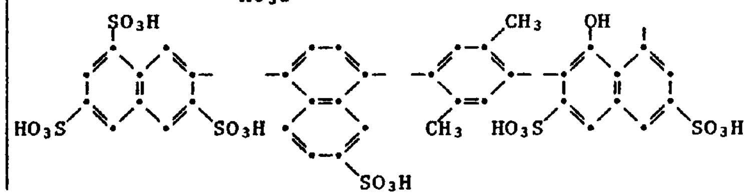 | Cl | 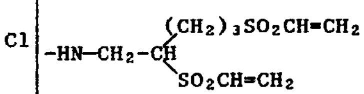 | Blau |

| Bsp. | | X | A | Farbton |
|---|---|---|---|---|
| 103 | 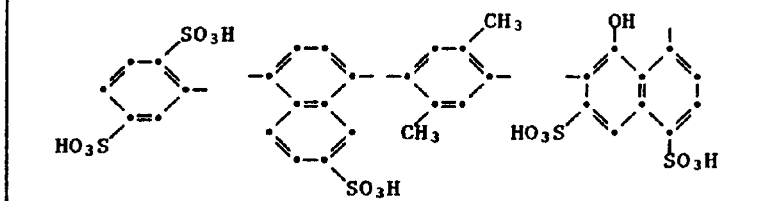 | Cl | 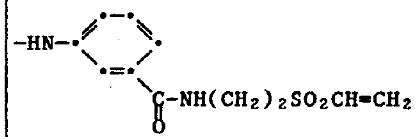 | dito |
| 104 | 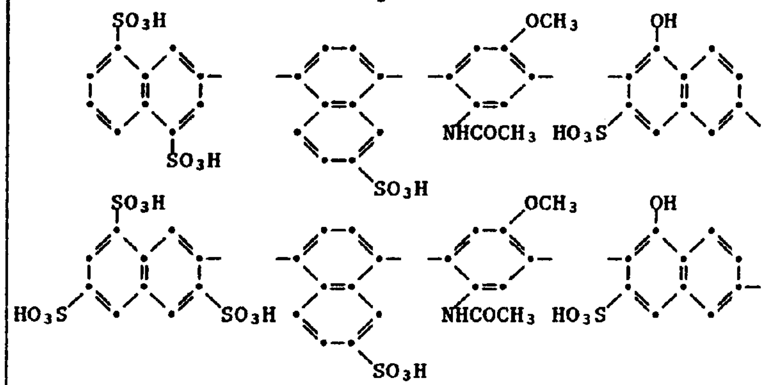 | Cl | 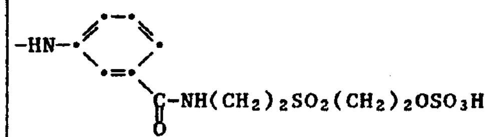 | Blau |
| 105 | | Cl | 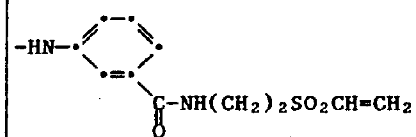 | Blau |
| 106 | 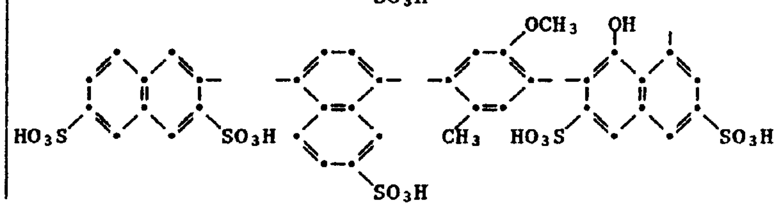 | F | 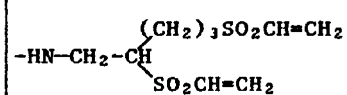 | grün-stichi-ges Blau |

| Bsp. | | X | A | Farbton |
|---|---|---|---|---|
| 107 | 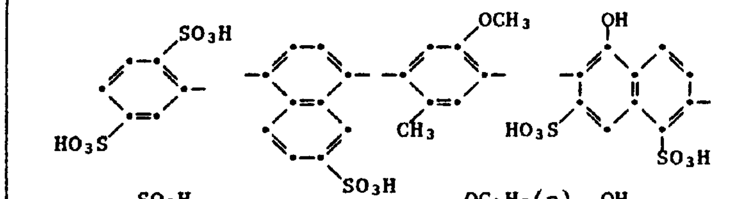 | Cl | 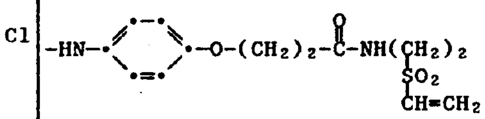 | Blau |
| 108 | 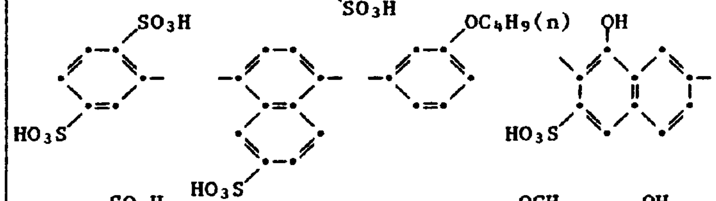 | Cl | 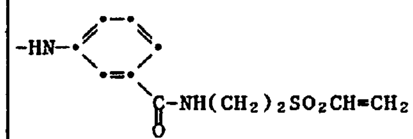 | Blau |
| 109 | 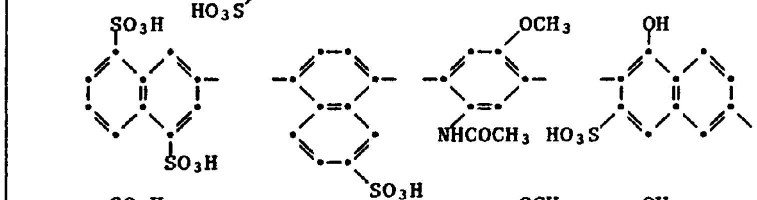 | Cl | 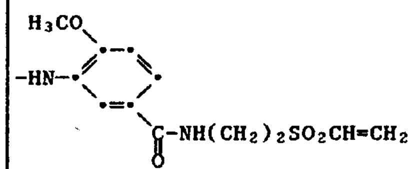 | Blau |
| 110 | 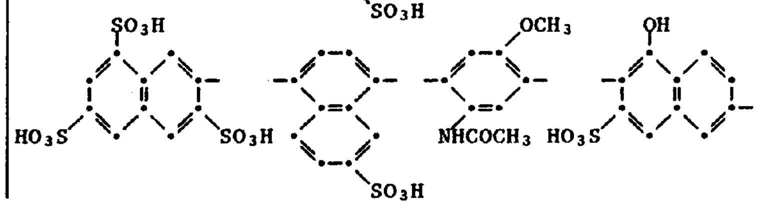 | Cl | 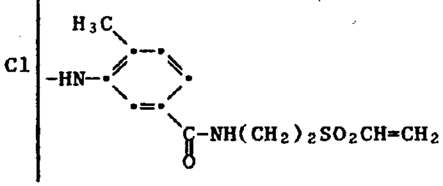 | dito |

| Bsp. | | X | A | Farbton |
|---|---|---|---|---|
| 111 | 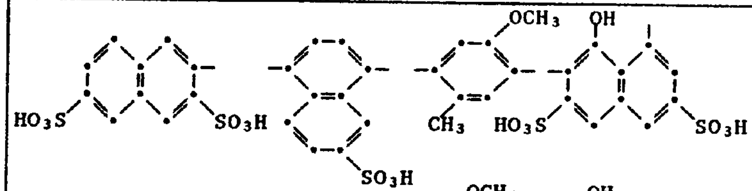 | Cl | 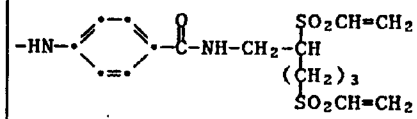 | grün-stichi-ges Blau |
| 112 | 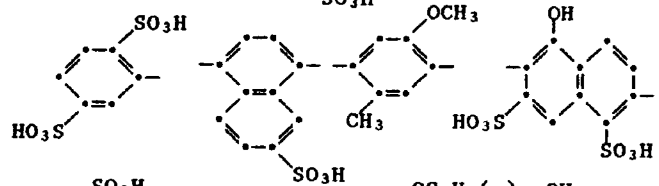 | Cl | 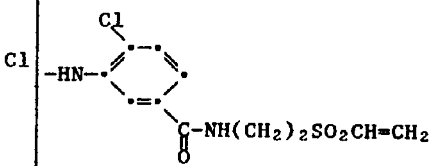 | Blau |
| 113 | 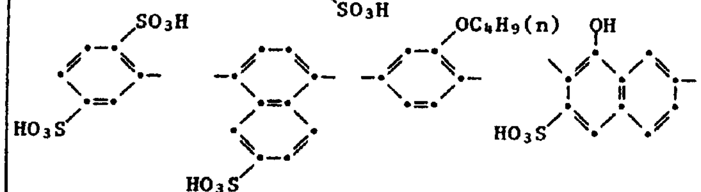 | Cl | 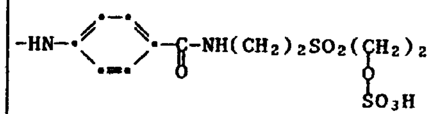 | dito |
| 114 | 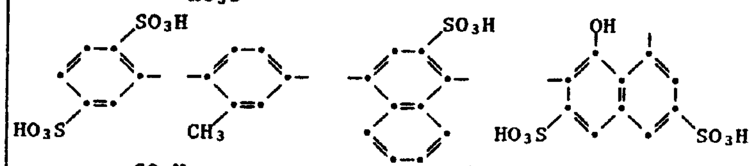 | Cl | 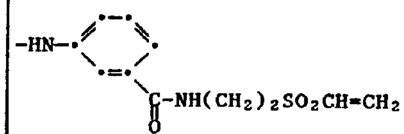 | rot-stichi-ges Blau |
| 115 | 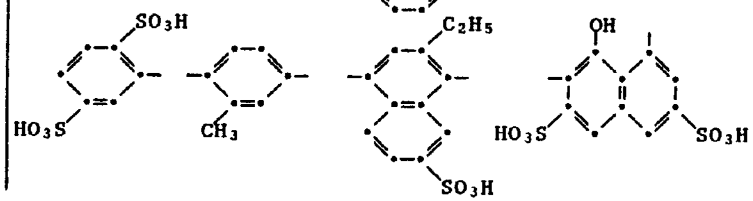 | Cl | 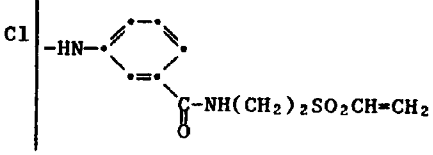 | Blau |

| Bsp. | | X | A | Farbton |
|---|---|---|---|---|
| 116 | 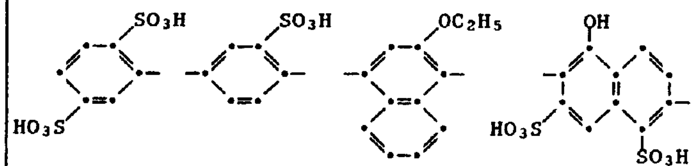 | Cl | 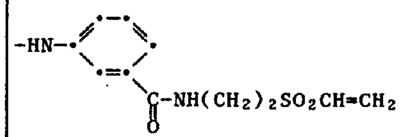 | Blau |
| 117 | 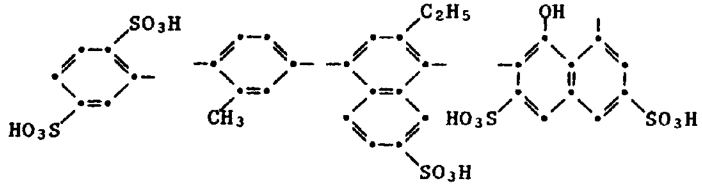 | Cl | 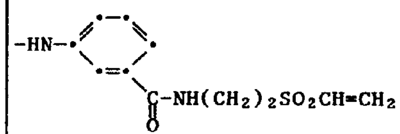 | dito |
| 118 | 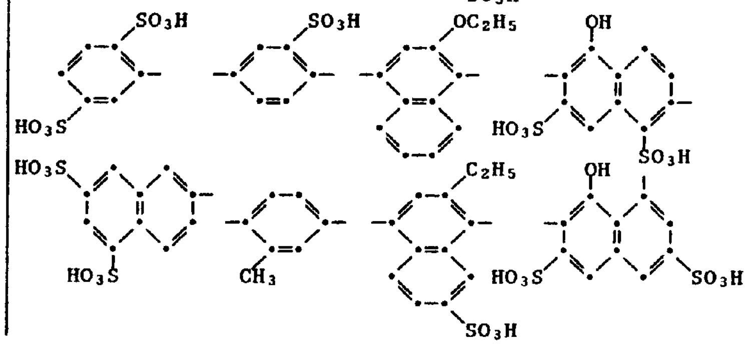 | Cl | $-HN(CH_2)_2O(CH_2)_2SO_2CH{=}CH_2$ | dito |
| 119 | | Cl | $-HN(CH_2)_2O(CH_2)_2SO_2CH{=}CH_2$ | grün-stichi-ges Blau |

| Bsp. | | X | A | Farbton |
|---|---|---|---|---|
| 120 | 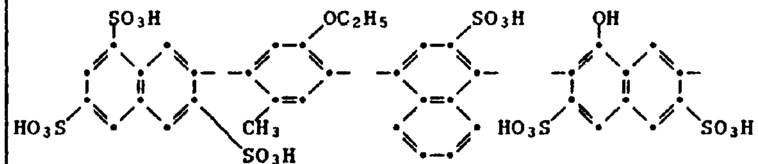 | Cl | 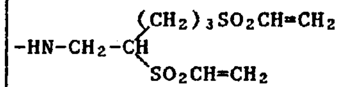 | Violett |
| 121 | 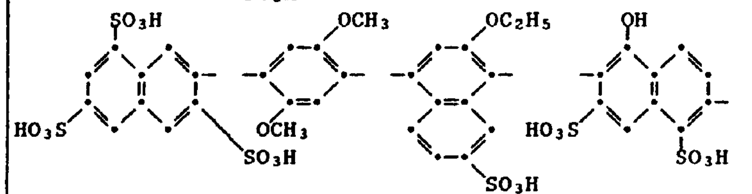 | Cl | $-HN(CH_2)_2O(CH_2)_2SO_2CH=CH$ | Blau |
| 122 | 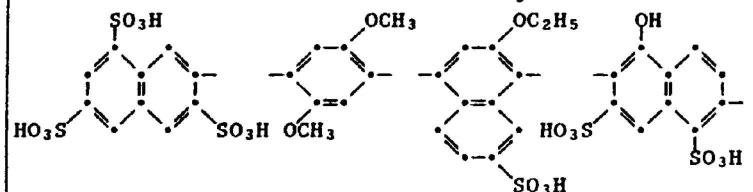 | Cl | 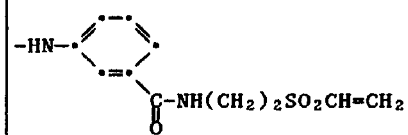 | dito |
| 123 | 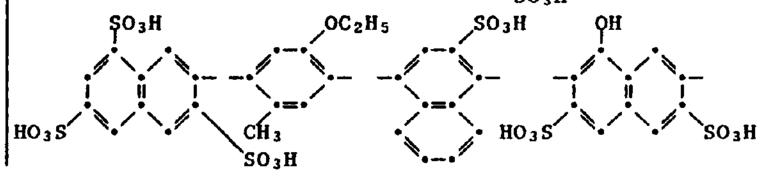 | Cl | 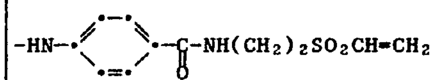 | Violett |

| Bsp. | | X | A | Farbton |
|---|---|---|---|---|
| 124 | 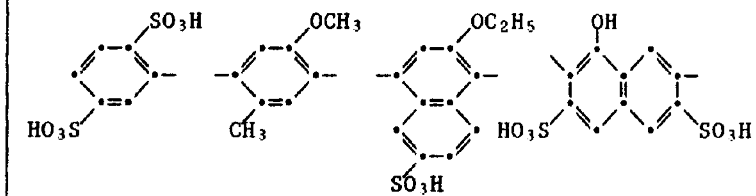 | Cl | $-HN-(CH_2)_2-O(CH_2)_2SO_2CH=CH_2$ | Blau |
| 125 | 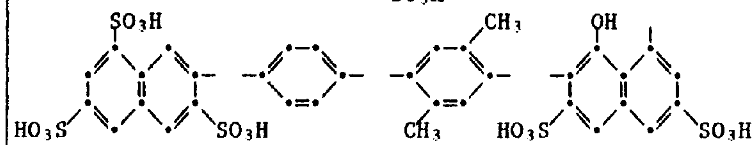 | F | 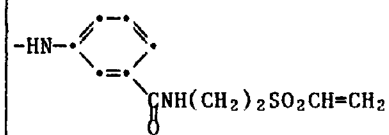 | Blau |
| 126 | 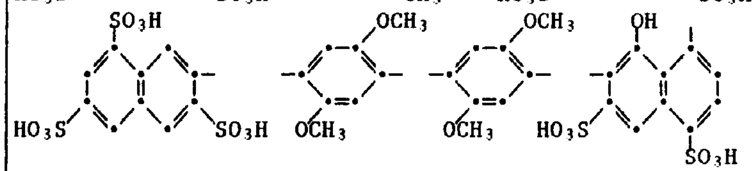 | F | 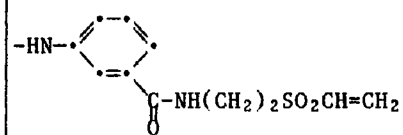 | grün-stichi-ges Blau |
| 127 | 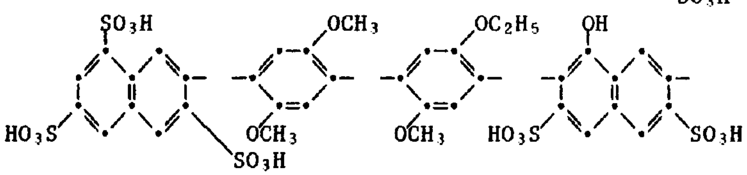 | Cl | 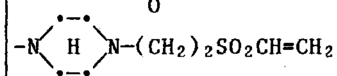 | Blau |

| Bsp. | | X | A | Farbton |
|---|---|---|---|---|
| 128 | 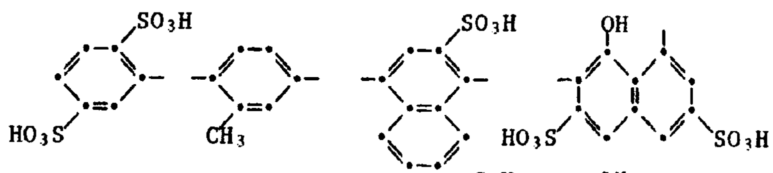 | Cl | 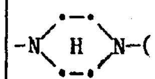 $-(CH_2)_3SO_2CH=CH_2$ | rot-stichi-ges Blau |
| 129 | 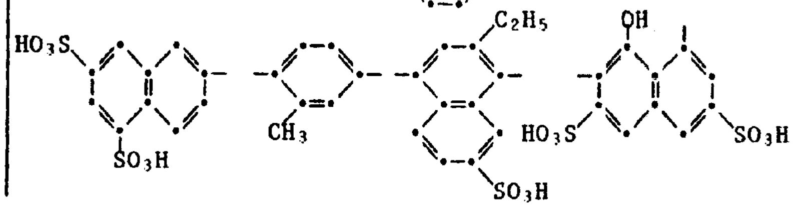 | Cl | $-HN-(CH_2)_2NH-(CH_2)_2SO_2CH=CH_2$ | grün-stichi-ges Blau |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalzinierte Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Färbevorschrift VII

In 2000 Teile Wasser werden 2 Teile des Farbstoffes von Beispiel 1, 160 Teile Natriumsulfat und als Puffermittel 4 Teile $Na_2HPO_4 \cdot 12H_2O$ und 1 Teil $KH_2PO_4$ gegeben, so dass ein Färbebad mit einem pH von 7 erhalten wird. In dieses Bad werden 100 Teile einer Wirkware aus nicht-mercerisierter Baumwolle eingetaucht. Im Laufe von 30 Minuten wird die Temperatur des Bades auf 130°C gebracht, und bei dieser Temperatur wird 60 Minuten lang gefärbt. Danach wird die gefärbte Ware aus dem Bad genommen, mit Wasser gewaschen, geseift, wieder mit Wasser gewaschen und getrocknet. Es wird eine tiefrote Färbung erhalten.

Färbevorschrift VIII

In 2000 Teile Wasser werden 2 Teile des Farbstoffes von Beispiel 1, 2 Teile des bekannten wasserunlöslichen Anthrachinonfarbstoffes der Formel

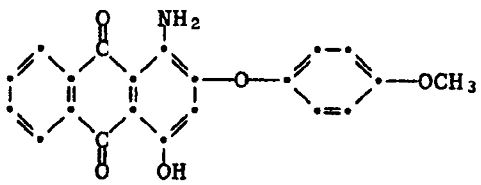

,

120 Teile Natriumsulfat und als Puffermittel 4 Teile $Na_2HPO_4 \cdot 12H_2O$ und 1 Teil $KH_2PO_4$ gegeben. In das so erhaltene Färbebad werden 100 Teile eines Polyester/Baumwoll-Mischgewebes (50:50) eingetaucht, und im Laufe von 30 Minuten wird die Temperatur des Bades auf 130°C gebracht, bei welcher 60 Minuten gefärbt wird. Dann wird das gefärbte Gewebe aus dem Bad genommen, mit Wasser gewaschen, geseift, erneut mit Wasser gewaschen und getrocknet. Es wird ein egal rot gefärbtes Gewebe erhalten. Das Färbebad wird vor Beginn und während des Färbens auf pH 7 gehalten.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

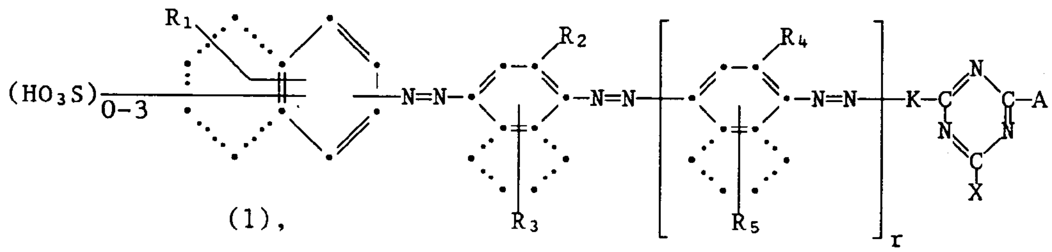

(1),

worin $R_1$ Wasserstoff, $C_{1-4}$-Alkyl, $C_{1-4}$-Alkoxy, Halogen, Nitro oder Carboxy; $R_2$ Wasserstoff, $C_{1-4}$-Alkyl, $C_{1-4}$-Alkoxy, Halogen, Carboxy oder Sulfo; $R_3$ Wasserstoff, $C_{1-4}$-Alkyl, $C_{1-4}$ -Alkoxy, Halogen, Nitro, Acetylamino, Ureido, Carboxy, Sulfo, Benzoylamino, α,β-Dibrompropionylamino oder γ-Vinylsulfonylbutyrylamino ist; $R_4$ bzw. $R_5$ die gleiche Bedeutung hat wie $R_2$ bzw. $R_3$, unabhängig voneinander; K der Rest einer Kupplungskomponente der Formel

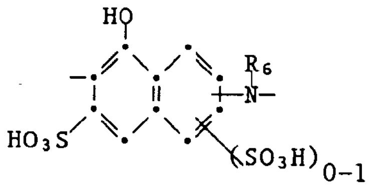

oder

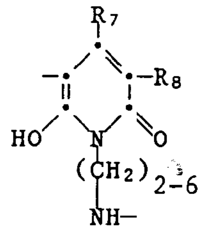

(2a) (2b)

wobei der Triazinrest in Formel (1) an die -N($R_6$)- bzw. -NH-Gruppe von K gebunden ist; $R_5$ Wasserstoff oder $C_{1-4}$-Alkyl; $R_7$ Wasserstoff oder $C_{1-4}$-Alkyl; $R_5$ Cyan, Carbamoyl, Carboxy oder Sulfomethyl; X Fluor, Chlor, Brom, Sulfo, $C_{1-4}$-Alkylsulfonyl, Phenylsulfonyl oder Carboxypyridinium; A ein Rest der Formel

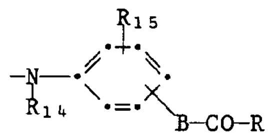

(3),

$R_{14}$ Wasserstoff oder Alkyl mit 1 bis 4 Kohlenstoffatomen, das durch Halogen, Hydroxy, Cyan, $C_{1-4}$-Alkoxy, $C_{1-4}$-Alkoxycarbonyl, Carboxy, Sulfamoyl, Sulfo oder Sulfato substituiert sein kann; $R_{15}$ Wasserstoff, $C_{1-4}$-Alkyl, $C_{1-4}$-Alkoxy, Halogen, Carboxy oder Sulfo; B eine direkte -Bindung oder ein Rest

$$-(CH_2)_n-$$

oder

$$-O-(CH_2)_n- ,$$

n = 1 bis 6; R ein Rest der Formel

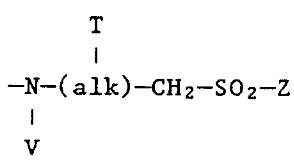

(4a),

$$-N(R')-(CH_2)_p-O-(CH_2)_m-SO_2-Z \qquad (4b),$$

$$-NH-(alk')-NH-(alk')-SO_2-Z \qquad (4c),$$

oder 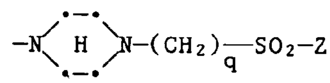 (4d),

Z β-Sulfatoäthyl, β-Thiosulfatoäthyl, β-Phosphatoäthyl, β-Acyloxyäthyl, β-Halogenäthyl oder Vinyl; alk ein Alkylenrest mit 1 bis 7 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat;
V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

$$-(alk)(T)-CH_2-SO_2-Z \qquad (4e),$$

worin Z, alk und T die angegebenen Bedeutungen haben; R' Wasserstoff oder $C_{1-6}$-Alkyl; alk' unabhängig voneinander Polymethylenreste mit 2 bis 6 C-Atomen oder deren verzweigte Isomere; und m = 1 bis 6, p = 1 bis 6 und q = 1 bis 6 ist, oder A ein direkt an den Triazinring gebundener Rest der Formel (4a), (4b), (4c) oder (4d) ist, worin Z, alk, T, V, R', alk', m, p und q die angegebenen Bedeutungen haben, und r = 0 oder 1 ist, wobei, falls r = 0 ist, diejenigen Reaktivfarbstoffe der Formel (1) ausgeschlossen sind, worin X Fluor und K der Rest der 1-Amino-8-hydroxynaphthalin-3,6- oder -4,6-disulfonsäure ist.

2. Reaktivfarbstoffe. gemäss Anspruch 1, worin K ein Rest der Formel (2a), $R_6$ Wasserstoff, Methyl oder Aethyl; X Fluor oder Chlor; A ein Rest der Formel (3); $R_{14}$ Wasserstoff; $R_{15}$ Wasserstoff, Methyl, Methoxy oder Chlor; B eine direkte Bindung oder ein Rest $-CH_2-$ oder $-O-CH_2C_2-$; R ein Rest der Formel (4a) oder (4b); Z β-Sulfatoäthyl, β-Chloräthyl oder Vinyl; T Wasserstoff oder ein Rest $-SO_2-Z$, worin Z die oben angegebene Bedeutung hat; V Wasserstoff oder ein Rest der Formel (4e), worin Z und T die oben angegebenen Bedeutungen haben; R' Wasserstoff; p = 2, m = 2 und r = 0 ist, wobei die in Anspruch 1 angegebene Einschränkung gilt.

3. Reaktivfarbstoffe gemäss Anspruch 1, worin K ein Rest der Formel (2a), $R_6$ Wasserstoff, Methyl oder Aethyl; X Fluor oder Chlor; A ein Rest der Formel (4a) oder (4b); Z β-Sulfatoäthyl, β-Chloräthyl oder Vinyl; T Wasserstoff oder ein Rest $-SO_2-Z$, worin Z die oben angegebene Bedeutung hat; V Wasserstoff oder ein Rest der Formel (4e), worin Z und die oben angegebenen Bedeutungen haben; R' Wasserstoff; p = 2, m = 2 und r = 0 ist, wobei die in Anspruch 1 angegebene Einschränkung gilt.

4. Reaktivfarbstoffe. gemäss Anspruch 1, worin ein K Rest der Formel (2a), $R_6$ Wasserstoff, Methyl oder Aethyl; X Fluor oder Chlor; A ein Rest der Formel (3); $R_{14}$ Wasserstoff; $R_{15}$ Wasserstoff, Methyl, Methoxy oder Chlor; B eine direkte Bindung oder ein Rest $-CH_2-$ oder $-O-CH_2CH_2-$; R ein Rest der Formel (4a) oder (4b); Z β-Sulfatoäthyl, β-Chloräthyl oder Vinyl ; T Wasserstoff oder ein Rest $-SO_2-Z$, worin Z die oben angegebene Bedeutung hat; V Wasserstoff oder ein Rest der Formel (4e), worin Z und T die oben angegebenen Bedeutungen haben; R' Wasserstoff; p = 2, m = 2 und r = 1 ist.

5. Reaktivfarbstoffe gemäss Anspruch 1, worin K ein Rest der Formel (2a), $R_6$ Wasserstoff, Methyl oder Aethyl; X Fluor oder Chlor; A ein Rest der Formel (4a), (4b), (4c) oder (4d); Z β-Sulfatoäthyl, β-Chloräthyl oder Vinyl; T Wasserstoff oder ein Rest $-SO_2-Z$, worin Z die oben angegebene Bedeutung hat; Wasserstoff oder ein Rest der Formel (4e), worin Z und T die oben angegebenen Bedeutungen haben; R' Wasserstoff; p = 2, m = 2 und r = 1 ist.

6. Reaktivfarbstoffe gemäss Anspruch 1, worin R ein Rest der Formel

$$-NHCH_2CH_2SO_2CH_2CH_2OSO_3H \qquad (5a),$$

$$-NHCH_2CH_2SO_2CH_2CH_2Cl \qquad (5b),$$

$$-NHCH_2CH_2SO_2CH=CH_2 \qquad (5c),$$

$$-NHCH_2CH_2CH_2SO_2CH=CH_2 \qquad (5d),$$

$$-NHCH_2CH_2OCH_2CH_2SO_2CH_2CH_2Cl \qquad (5e),$$

$-NHCH_2CH_2OCH_2CH_2SO_2CH{=}CH_2$ (5f),

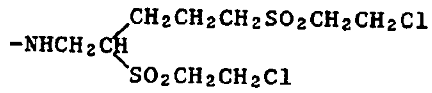

(5g),

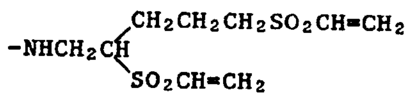

(5h)

oder 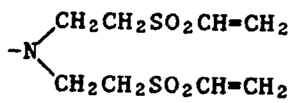

(5i).

7. Verfahren zur Herstellung von Reaktivfarbstoffen der Formel (1) dadurch gekennzeichnet, dass man einen entsprechenden Aminodisazo-oder Aminotrisazo-Farbstoff oder ein Farbstoffvorprodukt, ein s-Triazin der Formel

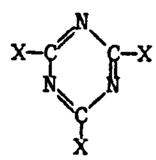

(6)

und ein Amin der Formel

H—A (7)

in beliebiger Folge miteinander umsetzt, wobei X und A die in Anspruch 1 angegebenen Bedeutungen haben, oder, im Falle der Verwendung von Farbstoffvorprodukten, die erhaltenen Zwischenprodukte in die gewünschten Monohalogentriazinfarbstoffe überführt und gegebenenfalls eine weitere Umwandlungsreaktion anschliesst.

8. Verfahren gemäss Anspruch 7, dadurch gekennzeichnet, dass man einen Aminodisazo- oder Aminotrisazo-Farbstoff mit einem s-Triazin der Formel (6) kondensiert, und die erhaltene Triazinverbindung anschliessend mit einem Amin der Formel (7) kondensiert.

9. Verfahren gemäss Anspruch 7, dadurch gekennzeichnet, dass man eine Komponente eines Aminodisazo- oder Aminotrisazo-Farbstoffes, die einen Rest der Formel

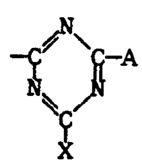

(8)

enthält, mit einer zur Herstellung des Farbstoffes benötigten zweiten Komponente umsetzt.

10. Verwendung der Reaktivfarbstoffe gemäss Anspruch 1, zum Färben oder Bedrucken von cellulosehaltigen Fasermaterialien.

11. Verwendung gemäss anspruch 10, zum Färben oder Bedrucken von Baumwolle.

## Claims

1. Reactive dyes of the formula

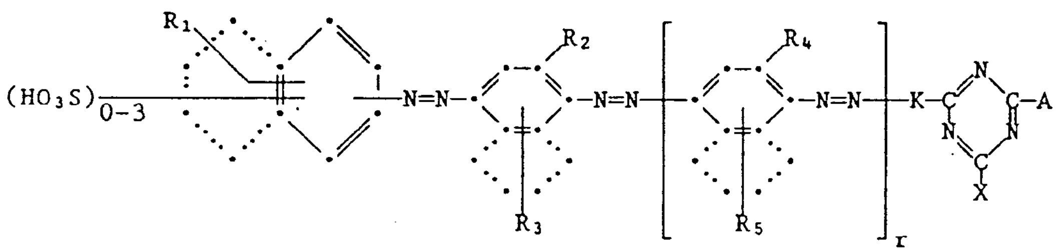

(1)

in which $R_1$ is hydrogen, $C_{1-4}$alkyl, $C_{1-4}$alkoxy, halogen, nitro or carboxyl; $R_2$ is hydrogen, $C_{1-4}$alkyl, $C_{1-4}$alkoxy, halogen, carboxyl or sulfo; $R_3$ is hydrogen, $C_{1-4}$alkyl, $C_{1-4}$alkoxy, halogen, nitro, acetylamino, ureido, carboxyl, sulfo, benzoylamino, α, β-dibromopropionylamino or γ-vinylsulfonylbutyrylamino; $R_4$ and $R_5$ have the same definition as $R_2$ and $R_3$, independently of one another; K is the radical of a coupling component of the formula

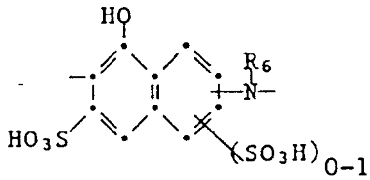

or

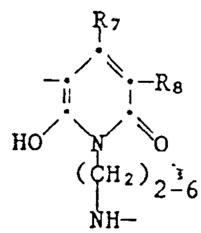

(2a)

(2b)

in which the trazine radical in formula (1) is bound to the -N($R_5$) - or -NH- group of K; $R_5$ is hydrogen or $C_{1-4}$alkyl; $R_7$ is hydrogen or $C_{1-4}$alkyl; $R_8$ is cyano, carbamoyl, carboxyl or sulfomethyl; X is fluorine, chlorine, bromine, sulfo, $C_{1-4}$alkylswulfonyl, phenylsulfonyl or carboxypyridinium; A is a radical of the formula

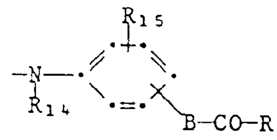 (3),

$R_{14}$ is hydrogen or alkyl having 1 to 4 carbon atoms, which can be substituted by halogen, hydroxyl, cyano, $C_{1-4}$alkoxy, $C_{1-4}$alkoxycarbonyl, carboxyl, sulfamoyl, sulfo or sulfato: $R_{15}$ is hydrogen, $C_{1-4}$alkyl, $C_{1-4}$alkoxy, halogen, carboxyl or sulfo; B is a direct bond or a $-(-CH_2-)_n-$ or $-O-(-CH_2-)_n-$ radical where n is 1 to 6; R is a radical of the formula

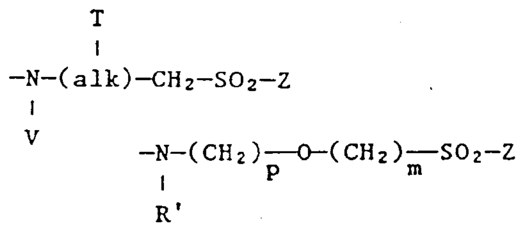

(4a),

(4b),

$$-NH-(alk')-NH-(alk')-SO_2-Z \qquad (4c),$$

or

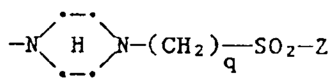 (4d),

Z is β-sulfatoethyl, β-thiosulfatoethyl, β-phosphatoethyl, β-acyloxyethyl, β-haloethyl or vinyl; alk is an alkylene radical having 1 to 7 C atoms or branched isomers thereof; T is hydrogen, chlorine, bromine, fluorine, hydroxyl, sulfato, acyloxy having 1 to 4 C atoms, cyano, carboxyl, alkoxycarbonyl having 1 to 5 C atoms, carbamoyl, or a radical $-SO_2-Z$ where Z is as defined above; V is hydrogen or an alkyl radical having 1 to 4 C atoms, which can be substituted by carboxyl or sulfo groups or by derivatives thereof, or by alkoxy groups having 1 or 2 C atoms, halogen or hydroxyl; or is a radical

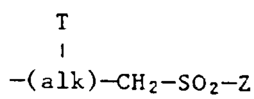 (4e)

in which Z, alk and T are as defined above; R′ is hydrogen or $C_{1-6}$alkyl; alk′, independently of one another, are polymethylene radicals having 2 to 6 C atoms or branched isomers thereof; and m is 1 to 6, p is 1 to 6 and q is 1 to 6, or A is a radical of the formula (4a), (4b), (4c) or (4d) directly bound to the triazine ring, where Z, alk, T, V, R′, alk′, m, p and q are as defined above, and r is 0 or 1, those reactive dyes of the formula (1) in which X is fluorine and K is the radical of 1-amino-8-hydroxynaphthalene-3,6- or 4,6-disulfonic acid being excepted in the case where r is 0.

2. Reactive dyes according to claim 1, in which K is a radical of the formula (2a), $R_6$ is hydrogen, methyl or ethyl; X is fluorine or chlorine; A is a radical of the formula (3); $R_{14}$ is hydrogen; $R_{15}$ is hydrogen, methyl, methoxy or chlorine; B is a direct bond or a $-CH_2-$ or $-0-CH_2CH_2-$ radical; R is a radical of the formula (4a) or (4b); Z is β-sulfatoethyl, β-chloroethyl or vinyl; T is hydrogen or an $-SO_2-Z$ radical in which Z is as defined above; V is hydrogen or a radical of the formula (4e), in which Z and T are as defined above; R′ is hydrogen; p is 2, m is 2 and r is 0, the restriction given in formula (1) being applicable.

3. Reactive dyes according to claim 1, in which K is a radical of the formula (2a), $R_6$ is hydrogen, methyl or ethyl; X is fluorine or chlorine, A is a radical of the formula (4a) or (4b); Z is β-sulfatoethyl, β-chloroethyl or vinyl; T is hydrogen or an $-SO_2-Z$ radical in which Z is as defined above; V is hydrogen or a radical of the formula (4e) in which Z and T are as defined above; R′ is hydrogen; p is 2, m is 2 and r is 0, the restriction given in formula (1) being applicable.

4. Reactive dyes according to claim 1, in which K is a radical of the formula (2a), $R_6$ is hydrogen, methyl or ethyl; X is fluorine or chlorine; A is a radical of the formula (3); $R_{14}$ is hydrogen; $R_{15}$ is hydrogen, methyl,

methoxy or chlorine; B is a direct bond or a $-CH_2-$ or $-O-CH_2CH_2-$ radical; R is a radical of the formula (4a) or (4b); Z is β-sulfatoethyl, β-chloroethyl or vinyl; T is hydrogen or an $-SO_2-Z$ radical in which Z is as defined above; V is hydrogen or a radical of the formula (4e) in which Z and T are as defined above; R′ is hydrogen; p is 2, m is 2 and r is 1.

5. Reactive dyes according to claim 1, in which K is a radical of the formula (2a), $R_6$ is hydrogen, methyl or ethyl; X is fluorine or chlorine; A is a radical of the formula (4a), (4b), (4c) or (4d); Z is β-sulfatoethyl, β-chloroethyl or vinyl; T is hydrogen or an $-SO_2-Z$ radical in which Z is as defined above; V is hydrogen or a radical of the formula (4e) in which Z and T are as defined above; R′ is hydrogen; p is 2, m is 2 and r is 1.

6. Reactive dyes according to claim 1, in which R is a radical of the formula

$-NHCH_2CH_2SO_2CH_2CH_2OSO_3H$ (5a),

$-NHCH_2CH_2SO_2CH_2CH_2Cl$ (5b),

$-NHCH_2CH_2SO_2CH=CH_2$ (5c),

$-NHCH_2CH_2CH_2SO_2CH=CH_2$ (5d),

$-NHCH_2CH_2OCH_2CH_2SO_2CH_2CH_2Cl$ (5e),

$-NHCH_2CH_2OCH_2CH_2SO_2CH=CH_2$ (5f),

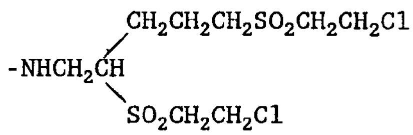

(5g),

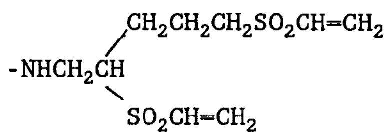

(5h),

or

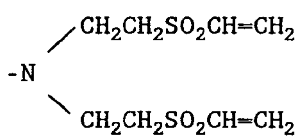

(5i)

7. A process for the preparation of reactive dyes of the formula (1), wherein a corresponding aminodisazo or aminotrisazo dye or a dye precursor, an s-triazine of the formula

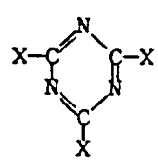

(6)

and an amine of the formula

H - A (7)

are reacted with one another in any desired order, X and A being as defined in claim 1, or, in the case where dye precursors are used, the intermediates resulting are converted into the desired monohalotriazine dyes and a further conversion reaction is carried out afterwards, if desired

8. A process according to claim 7, wherein an aminodisazo or aminotrisazo dye is condensed with an s-triazine of the formula (6) and the resulting triazine compound is then condensed with an amine of the formula (7).

9. A process according to claim 7, wherein a component of an aminodisazo or aminotriazo dye containing a radical of the formula

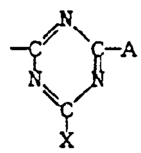

(8)

is reacted with a second component necessary for the preparation of the dye.

10. Use of a reactive dye according to claim 1 for the dyeing or printing of cellulose-containing fibre materials.

11. Use according to claim 10 for the dyeing or printing of cotton.

## Revendications

1. Colorants réactifs répondant à la formule

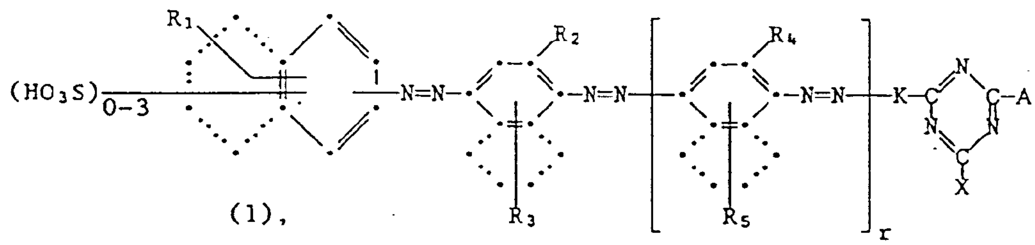

(1),

dans laquelle $R_1$ désigne un atome d'hydrogène, un groupe alkyle en $C_1$-$C_4$, alcoxy en $C_1$-$C_4$, un atome d'halogène, un groupe nitro ou carboxy ; $R_2$ désigne un atome d'hydrogène, un groupe alkyle en $C_1$-$C_4$, alcoxy en $C_1$-$C_4$, un atome d'halogène, un groupe carboxy ou sulfo ; $R_3$ désigne un atome d'hydrogène, un groupe alkyle en $C_1$-$C_4$, alcoxy en $C_1$-$C_4$, un atome d'halogène, un groupe nitro, acétylamino, uréido, carboxy, sulfo, benzoylamino, $\alpha,\beta$-dibromopropionylamino ou $\gamma$-vinylsulfonylbutyrylamino ; $R_4$ et $R_5$ ont repectivement la même signification que $R_2$ et $R_3$ , indépendamment l'un de l'autre ; K est le radical d'un constituant de copulation répondant à la formule

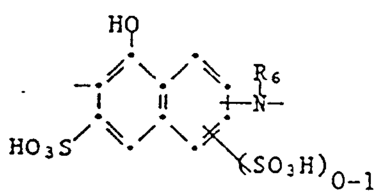

(2a)

ou

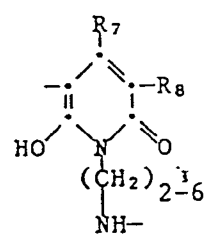

(2b)

dans laquelle le radical triazine de la formule (1) est lié au groupe -N($R_6$)- ou -NH- de K ; $R_6$ est un atome d'hydrogène ou un groupe alkyle en $C_1$-$C_4$ ; $R_7$ est un atome d'hydrogène ou un groupe alkyle en $C_1$-$C_4$ ; $R_6$ est un groupe cyano, carbamoyle, carboxy ou sulfométhyle ; X est un atome de fluor, de chlore, de brome, un groupe sulfo, alkylsulfonyle en $C_1$-$C_4$, phénylsulfonyle ou carboxypyridinium ; A est un radical répondant à la formule

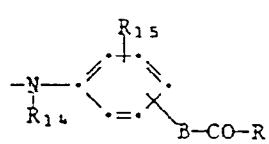

(3),

dans laquelle $R_{14}$ désigne un atome d'hydrogène ou un groupe alkyle en $C_1$-$C_4$, qui peut être substitué par un atome d'halogène, un groupe hydroxy, cyano, alcoxy en $C_1$-$C_4$, (alcoxy en $C_1$-$C_4$)carbonyle, carboxy, sulfamoyle, sulfo ou sulfato ; $R_{15}$ est un atome d'hydrogène, un groupe alkyle en $C_1$-$C_4$, alcoxy en $C_1$-$C_4$, un atome

d'halogène, un groupe carboxy ou sulfo ; B est une liaison directe ou un radical $-(CH_2)_n-$ ou $-O-(CH_2)_n-$, n est égal à 1 à 6 ; R est un radical répondant à la formule :

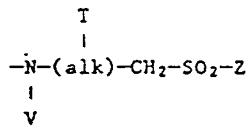
(4a),

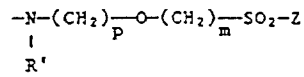
(4b),

$-NH-(alk')-NH-(alk')-SO_2-Z$ (4c)

ou 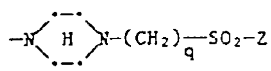
(4d),

Z est un groupe β-sulfatoéthyle, β-thiosulfatoéthyle, β-phosphatoéthyle, β-acyloxyéthyle, β-halogénoéthyle ou vinyle ; alk est un radical alkylène en $C_1$-$C_7$ ou ses isomères ramifiés ; T est un atome d'hydrogène, de chlore, de brome, de fluor, un groupe hydroxy, sulfato, acyloxy en $C_1$-$C_4$, cyano, carboxy, (alcoxy en $C_1$-$C_5$)carbonyle, carbamoyle ou un radical $-SO_2-Z$ dans lequel Z a la signification indiquée ci-dessus ;
V est un atome d'hydrogène ou un radical alkyle en $C_1$-$C_4$, qui peut être substitué par des groupes carboxy ou sulfo ou par leurs dérivés, par des groupes alcoxy en $C_1$-$C_2$, par un atome d'halogène ou un groupe hydroxy ; ou un radical

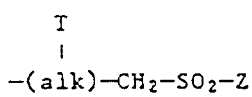
(4e),

dans lequel Z, alk et T ont les significations indiquées ; R' est un atome d'hydrogène ou un groupe alkyle en $C_1$-$C_6$ ; les alk' désignent, indépendamment l'un de l'autre, des radicaux polyméthylènes en $C_2$-$C_6$ ou leurs isomères ramifiés ; et m est égal à 1 à 6, p est égal à 1 à 6 et q est égal à 1 à 6, ou bien A désigne un radical lié directement au cycle triazine, répondant à la formule (4a), (4b), (4c) ou (4d), où Z, alk, T, V, R', alk', m, p et q ont les significations indiquées, et r est égal à 0 ou 1, étant entendu que, au cas où r est égal à 0, les colorants réactifs répondant à la formule (1) dans laquelle X est un atome de fluor et K est le radical de l'acide 1-amino-8-hydroxynaphtalène-3,6- ou -4,6-disulfonique sont exclus.

2. Colorants réactifs selon la revendication 1, dans lesquels K est un radical répondant à la formule (2a), $R_6$ est un atome d'hydrogène, un groupe méthyle ou éthyle ; X est un atome de fluor ou de chlore ; A est un radical répondant à la formule (3) ; $R_{14}$ est un atome d'hydrogène; $R_{15}$ est un atome d'hydrogène, un groupe méthyle, méthoxy ou un atome de chlore ; B est une liaison directe ou un radical $-CH_2-$ ou $-O-CH_2CH_2-$ ; R est un radical répondant à la formule (4a) ou (4b) ; Z est un groupe β-sulfatoéthyle, β-chloréthyle ou vinyle ; T est un atome d'hydrogène ou un radical $-SO_2-Z$, où Z a la signification indiquée ci-dessus; V est un atome d'hydrogène ou un radical répondant à la formule (4e) dans laquelle Z et T ont les significations indiquées ci-dessus ; R' est un atome d'hydrogène ; p est égal à 2, m est égal à 2 et r est égal à 0, la limitation indiquée dans la revendication 1 étant valable.

3. Colorants réactifs selon la revendication 1, dans lesquels K est un radical répondant à la formule (2a), $R_6$ est un atome d'hydrogène, un groupe méthyle ou éthyle ; X est un atome de fluor ou de chlore ; A est un radical répondant à la formule (4a) ou (4b) ; Z est un groupe β-sulfatoéthyle, β-chloréthyle ou vinyle ; T est un atome d'hydrogène ou un radical $-SO_2-Z$, dans lequel Z a la signification indiquée ci-dessus ; V est un atome d'hydrogène ou un radical répondant à la formule (4e), dans laquelle Z et T ont les significations indiquées ci-dessus ; R' est un atome d'hydrogène ; p est égal à 2, m est égal à 2 et r est égal à 0, la limitation indiquée dans la revendication 1 étant valable.

4. Colorants réactifs selon la revendication 1, dans lesquels K est un radical répondant à la formule (2a), $R_6$ est un atome d'hydrogène, un groupe méthyle ou éthyle ; X est un atome de fluor ou de chlore ; A est un radical répondant à la formule (3) ; $R_{14}$ est un atome d'hydrogène; $R_{15}$ est un atome d'hydrogéne, un groupe

méthyle, méthoxy ou un atome de chlore ; B est une liaison directe ou un radical $-CH_2-$ ou $-O-CH_2CH_2-$ ; R est un radical répondant à la formule (4a) ou (4b) ; Z est un groupe β-sulfatoéthyle, β-chloréthyle ou vinyle ; T est un atome d'hydrogène ou un radical $-SO_2-Z$, dans lequel Z a la signification indiquée ci-dessus ; V est un atome d'hydrogène ou un radical répondant à la formule (4e) dans laquelle Z et T ont les significations indiquées ci-dessus; R' est un atome d'hydrogène ; p est égal à 2, m est égal à 2 et r est égal à 1.

5. Colorants réactifs selon la revendication 1, dans lesquels K est un radical répondant à la formule (2a), $R_6$ est un atome d'hydrogène, un groupe méthyle ou éthyle ; X est un atome de fluor ou de chlore ; A est un radical répondant à la formule (4a), (4b), (4c) ou (4d) ; Z est un radical β-sulfatoéthyle, β-chloréthyle ou vinyle ; T est un atome d'hydrogène ou un radical $-SO_2-Z$, dans lequel Z a la signification indiquée ci-dessus ; V est un atome d'hydrogène ou un radical répondant à la formule (4e) dans laquelle Z et T ont les significations indiquées ci-dessus; R' est un atome d'hydrogène ; p est égal à 2, m est égal à 2 et r est égal à 1.

6. Colorants réactifs selon la revendication 1, dans lesquels R est un radical répondant à la formule

$-NHCH_2CH_2SO_2CH_2CH_2OSO_3H$ (5a),

$-NHCH_2CH_2SO_2CH_2CH_2Cl$ (5b),

$-NHCH_2CH_2SO_2CH=CH_2$ (5c),

$-NHCH_2CH_2CH_2SO_2CH=CH_2$ (5d),

$-NHCH_2CH_2OCH_2CH_2SO_2CH_2Ch_2Cl$ (5e),

$-NHCH_2CH_2OCH_2CH_2SO_2CH=-CH_2$ (5f),

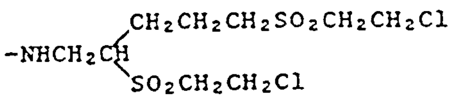 (5g),

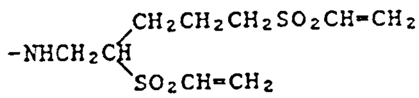 (5h)

ou 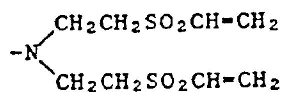 (5i).

7. Procédé de préparation de colorants réactifs répondant à la formule (1), caractérisé en ce qu'on fait réagir les uns avec les autres un colorant aminodisazoïque ou aminotrisazoique approprié ou un précurseur du colorant, une s-triazine répondant à la formule

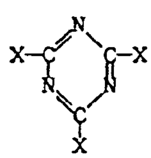 (6)

et une amine répondant à la formule

H - A (7)

dans un ordre quelconque, X et A ayant les significations indiquées dans la revendication 1, ou, dans le cas de l'utilisation de précurseurs du colorant, on transforme les produits intermédiaires obtenus en les colorants monohalogénotriaziniques souhaités et on effectue ensuite, le cas échéant, une autre réaction de transformation.

8. Procédé selon la revendication 7, caractérisé en ce qu'on condense un colorant aminodisazoïque ou aminotrisazoïque avec une s-triazine répondant à la formule (6), et on condense ensuite le dérivé triazinique obtenu avec une amine répondant à la formule (7).

9. Procédé selon la revendication 7, caractérisé en ce qu'on fait réagir un constituant d'un colorant aminodisazoïque ou aminotrisazoïque, qui contient un radical répondant a la formule

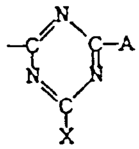

(8)

avec un second constituant nécessaire pour la préparation du colorant.

10. Utilisation des colorants réactifs selon la revendication 1, pour la teinture ou l'impression de matières fibreuses cellulosiques.

11. Utilisation selon la revendication 10, pour la teinture ou l'impression du coton.